# EUROPEAN PATENT APPLICATION

(11) **EP 4 807 495 A1**
(43) Date of publication of application: **16.09.2026**
(21) Application number: 26163133.7
(22) Date of filing: 09.03.2026
(51) Int. Cl.: G06F 1/20, G02B 6/42, H05K 7/20

(54) **DIRECT CONTACT HEAT TRANSFER COUPLINGS FOR PLUGGABLE NETWORK INTERFACE DEVICES**

(30) Priority: 12.03.2025 US 202519077767
(71) Applicant: Mellanox Technologies, Ltd., 2069200 Yokneam (IL)
(72) Inventor: KAZAV, Yaniv, 2069200 Yokneam (IL); ULLMAN, Yuval, 2069200 Yokneam (IL); HAZIN, Nimr, 2069200 Yokneam (IL); MOUSA, Jamal, 2069200 Yokneam (IL); NOYMAN, Bar, 2069200 Yokneam (IL); SHABTAY, Ayal, 2069200 Yokneam (IL)
(74) Representative: Mathys & Squire

(57) **Abstract**

A pluggable network interface device includes a printed circuit board ("PCB"), a housing, and a heatsink. The heatsink includes a first surface and a second surface, disposed opposite the first surface, that is maintained in direct contact with a surface of a heat-generating circuit of the PCB. The housing includes an outer shell defining an exterior of the housing, a receiving cavity disposed inside the outer shell, and an aperture extending through a first side of the outer shell from the exterior of the housing into the receiving cavity. A portion of the PCB and the second surface of the heatsink are disposed inside the receiving cavity while a portion of the heatsink extends from within the receiving cavity through the aperture arranging the first surface of the heatsink adjacent the exterior of the housing.

## Description

### CROSS-REFERENCE TO RELATED APPLICATIONS

The present application is a continuation-in-part of U.S. Patent Application No. 18/367,094, filed on September 12, 2023, entitled "Direct Contact Heat Transfer Couplings for Pluggable Network Interface Devices," the entire disclosure of which is hereby incorporated herein by reference, in its entirety, for all that it teaches and for all purposes.

### BACKGROUND

The present disclosure is generally directed to networking cable assemblies and relates more particularly to pluggable network interface devices.

Datacenters are the storage and data processing hubs of the Internet. Cable assemblies are used to interconnect network devices and/or network switches within a datacenter to enable high-speed communication between the network switches.

### BRIEF SUMMARY

The invention is defined by the claims. In order to illustrate the invention, aspects and embodiments which may or may not fall within the scope of the claims are described herein.

Aspects of the present disclosure include a pluggable network interface device including a printed circuit board ("PCB"), a housing, and a heatsink. The heatsink includes a first surface and a second surface, disposed opposite the first surface, that is maintained in direct contact with a surface of a heat-generating circuit of the PCB. The housing includes an outer shell defining an exterior of the housing, a receiving cavity disposed inside the outer shell, and an aperture extending through a first side of the outer shell from the exterior of the housing into the receiving cavity. A portion of the PCB and the second surface of the heatsink are disposed inside the receiving cavity while a portion of the heatsink extends from within the receiving cavity through the aperture arranging the first surface of the heatsink adjacent the exterior of the housing.

In one embodiment, a pluggable network interface device is provided that includes a PCB comprising at least one heat-generating circuit package; a heatsink comprising a first surface and a second surface disposed opposite the first surface, the first surface being offset a thickness from the second surface, and the second surface arranged in direct contact with an outer surface of the at least one heat-generating circuit package; and a housing comprising: an outer shell defining an exterior of the housing; a receiving cavity disposed inside the outer shell; and an aperture extending through a first side of the outer shell from the exterior of the housing into the receiving cavity; wherein a portion of the PCB and the second surface of the heatsink are both disposed inside the receiving cavity, and wherein a portion of the heatsink extends from within the receiving cavity through the aperture arranging the first surface of the heatsink adjacent the exterior of the housing.

In an illustrative embodiment, a pluggable network interface module includes a split-shell housing running a first length from a first end of the split-shell housing to a second end of the split-shell housing, the split-shell housing comprising: a first shell portion extending the first length and comprising a first cavity running along a portion of the first length; a second shell portion extending the first length and comprising a second cavity running along a portion of the first length, wherein the first shell portion is joined to the second shell portion, and wherein the first cavity and the second cavity together form a receiving cavity for the split-shell housing; and an aperture extending through a first side of the first shell portion from the receiving cavity to an exterior of the split-shell housing; a circuit substrate disposed at least partially within the receiving cavity, the circuit substrate comprising at least one heat-generating element; and a heatsink comprising a first surface and a second surface disposed opposite the first surface, the first surface being offset a thickness from the second surface, and the second surface arranged in direct contact with an outer surface of the at least one heat-generating element, wherein the second surface of the heatsink is disposed inside the receiving cavity, and wherein a portion of the heatsink extends from within the receiving cavity through the aperture arranging the first surface of the heatsink adjacent the exterior of the first shell portion of the split-shell housing.

In an illustrative embodiment, a pluggable network interface module includes a split-shell housing running a first length from a first end of the split-shell housing to a second end of the split-shell housing, the split-shell housing comprising: a first shell portion extending the first length and comprising a first cavity running along a portion of the first length; a second shell portion extending the first length and comprising a second cavity running along a portion of the first length, wherein the first shell portion is joined to the second shell portion, and wherein the first cavity and the second cavity together form a receiving cavity for the split-shell housing; and an aperture extending through a first side of the first shell portion from the receiving cavity to an exterior of the split-shell housing; a circuit substrate disposed at least partially within the receiving cavity, the circuit substrate comprising at least one heat-generating element; a heatsink comprising a first surface and a second surface disposed opposite the first surface, the first surface being offset a thickness from the second surface, and the second surface arranged in direct contact with an outer surface of the at least one heat-generating element, wherein the second surface of the heatsink is disposed inside the receiving cavity, and wherein a portion of the heatsink extends from within the receiving cavity through the aperture arranging the first surface of the heatsink adjacent the exterior of the first shell portion of the split-shell housing; and a spring arranged in contact with the heatsink, the spring maintaining the direct contact between the second surface of the heatsink and the outer surface of the at least one heat-generating element.

Aspects of the present disclosure also include: pluggable network interface device, comprising: a substrate supporting at least one heat generating circuit package; a heatsink facilitating transfer of heat away from the at least one heat generating circuit package; and a housing, comprising: a first shell portion; and a second shell portion that interfaces with the first shell portion to form a cavity for the housing in which the substrate and the heatsink are at least partially contained.

In some aspects, the heatsink is disposed between the first shell portion and the substrate.

In some aspects, the heatsink facilitates the transfer of heat away from the at least one heat generating circuit package via at least two modes of heat transfer.

In some aspects, the at least two modes of heat transfer comprise conduction and convection.

In some aspects, the first shell portion comprises at least one opening that exposes the heatsink and enables air to flow through the heatsink.

In some aspects, the at least one opening comprises a first opening and a second opening.

In some aspects, the first shell portion comprises a contact surface that faces toward the substrate.

In some aspects, the heatsink comprises one or more finned structures.

In some aspects, the one or more finned structures comprise at least one of a c-shape and a u-shape.

In some aspects, the heatsink further comprises at least one Thermal Interface Material (TIM).

In some aspects, the at least one TIM contacts the one or more finned structures and further contacts the first shell portion.

In some aspects, the heatsink further comprises at least one strip of foil between the at least one TIM and the one or more finned structures.

In some aspects, the first shell portion comprises a cover that conductively dissipates heat from the heatsink.

Aspects of the present disclosure also include a pluggable network interface device, comprising: a substrate supporting at least one heat generating circuit package; a heatsink facilitating transfer of heat away from the at least one heat generating circuit package; and a split-shell housing having a cavity in which the substrate and the heatsink are at least partially contained, wherein the split-shell housing further comprises at least one opening that enables an airflow across at least a portion of the heatsink.

In some aspects, the at least one opening comprises a first opening near a proximate end of the pluggable network interface device and a second opening near a distal end of the pluggable network interface device.

In some aspects, the distal end of the pluggable network interface device is configured to be inserted into a receptacle.

In some aspects, the split-shell housing is configured as at least one of a small form factor pluggable (SFP), a quad SFP (QSFP), a QSFP-double density (QSFP-DD), and an octal SFP (OSFP).

In some aspects, the heatsink comprises: a heatsink base; a plurality of finned structures supported by the heatsink base; and a Thermal Interface Material (TIM) that thermally connects one or more of the plurality of finned structures with at least a portion of the split-shell housing.

In some aspects, the split-shell housing comprises a first shell portion and a second shell portion and wherein the heatsink is positioned between the first shell portion and the substrate.

Aspects of the present disclosure also include a pluggable network interface device, comprising: a substrate supporting at least one heat generating circuit package; a housing having a cavity in which the substrate is at least partially contained; and a heatsink contained in the cavity of the housing with the at least one heat generating package, wherein the heatsink facilitates transfer of heat away from the at least one heat generating circuit package by conduction and convection.

Numerous additional features and advantages are described herein and will be apparent to those skilled in the art upon consideration of the following Detailed Description and in view of the figures.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE SEVERAL VIEWS OF THE DRAWINGS

The accompanying drawings are incorporated into and form a part of the specification to illustrate several examples of the present disclosure. These drawings, together with the description, explain the principles of the disclosure. The drawings simply illustrate preferred and alternative examples of how the disclosure can be made and used and are not to be construed as limiting the disclosure to only the illustrated and described examples. Further features and advantages will become apparent from the following, more detailed, description of the various aspects, embodiments, and configurations of the disclosure, as illustrated by the drawings referenced below.
Fig. 1A shows a perspective view of a pluggable network interface device in accordance with embodiments of the present disclosure;
Fig. 1B shows an exploded perspective view of a pluggable network interface device in accordance with embodiments of the present disclosure;
Fig. 2 shows a section view taken through line "2-2" of Fig. 1 in accordance with embodiments of the present disclosure;
Fig. 3 shows a detail partial section view taken from circle "3" of Fig. 2 in accordance with embodiments of the present disclosure;
Fig. 4 is a schematic force block diagram of a direct contact heatsink arrangement in accordance with embodiments of the present disclosure;
Fig. 5A shows a perspective view of a pluggable network interface device in accordance with embodiments of the present disclosure;
Fig. 5B shows a section view taken through line "5B-5B" of Fig. 5A in accordance with embodiments of the present disclosure;
Fig. 6A shows a perspective view of a pluggable network interface device in accordance with embodiments of the present disclosure;
Fig. 6B shows a section view taken through line "6B-6B" of Fig. 6A in accordance with embodiments of the present disclosure;
Fig. 6C shows an exploded perspective view of a heatsink and spring arrangement of the pluggable network interface device shown in Fig. 6A in accordance with embodiments of the present disclosure;
Fig. 7A shows a perspective view of a pluggable network interface device in accordance with embodiments of the present disclosure;
Fig. 7B shows a section view taken through line "7B-7B" of Fig. 7A in accordance with embodiments of the present disclosure;
Fig. 8A shows a perspective view of a pluggable network interface device in accordance with embodiments of the present disclosure;
Fig. 8B shows a section view taken through line "8B-8B" of Fig. 8A in accordance with embodiments of the present disclosure;
Fig. 8C shows a perspective view of a heatsink and spring arrangement of the pluggable network interface device shown in Fig. 8A in accordance with embodiments of the present disclosure;
Fig. 8D shows an exploded perspective view of the heatsink and spring arrangement of the pluggable network interface device shown in Fig. 8C in accordance with embodiments of the present disclosure;
Fig. 9A shows a perspective view of a pluggable network interface device in accordance with embodiments of the present disclosure;
Fig. 9B shows a section view taken through line "9B-9B" of Fig. 9A in accordance with embodiments of the present disclosure;
Fig. 10A shows a top perspective view of a pluggable network interface device in accordance with embodiments of the present disclosure;
Fig. 10B shows a section view taken through line "10B-10B" of Fig. 10A in accordance with embodiments of the present disclosure;
Fig. 10C shows an isometric view of the cross-section shown in Fig. 10B;
Fig. 10D shows another top perspective view of a pluggable network interface device in accordance with embodiments of the present disclosure;
Fig. 10E shows a section view taken through line "10E-10E" of Fig. 10D in accordance with embodiments of the present disclosure;
Fig. 11 shows a top perspective view of a pluggable network interface device having a first shell portion removed therefrom in accordance with embodiments of the present disclosure;
Fig. 12A is a top perspective view of a heatsink in accordance with embodiments of the present disclosure;
Fig. 12B is a bottom perspective view of a heatsink in accordance with embodiments of the present disclosure;
Fig. 13A is a top perspective view of a first shell portion in accordance with embodiments of the present disclosure;
Fig. 13B is a bottom perspective view of a first shell portion in accordance with embodiments of the present disclosure;
Fig. 14 is a top perspective view of a second shell portion in accordance with embodiments of the present disclosure;
Fig. 15 illustrates an example data center in accordance with embodiments of the present disclosure;
Fig. 16 illustrates a computer system in accordance with embodiments of the present disclosure;
Fig. 17 illustrates a transceiver in accordance with embodiments of the present disclosure;
Fig. 18 illustrates a system that facilitates QKD connectivity in accordance with embodiments of the present disclosure;
Fig. 19 illustrates a system that facilitates QKD communication in accordance with embodiments of the present disclosure;
Fig. 20 illustrates a computer system in accordance with embodiments of the present disclosure;
Fig. 21 illustrates a computer system in accordance with embodiments of the present disclosure;
Fig. 22 illustrates a system including a NIC for facilitating communication within a network in accordance with embodiments of the present disclosure;
Fig. 23A illustrates a transceiver in accordance with embodiments of the present disclosure;
Fig. 23B illustrates a transceiver in accordance with embodiments of the present disclosure; and
Fig. 24 illustrates various deployments of resources that may benefit from a pluggable network interface device in accordance with embodiments of the present disclosure.

### DETAILED DESCRIPTION

Before any embodiments of the disclosure are explained in detail, it is to be understood that the disclosure is not limited in its application to the details of construction and the arrangement of components set forth in the following description or illustrated in the drawings. The disclosure is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Further, the present disclosure may use examples to illustrate one or more aspects thereof. Unless explicitly stated otherwise, the use or listing of one or more examples (which may be denoted by "for example," "by way of example," "e.g.," "such as," or similar language) is not intended to and does not limit the scope of the present disclosure.

The ensuing description provides embodiments only, and is not intended to limit the scope, applicability, or configuration of the claims. Rather, the ensuing description will provide those skilled in the art with an enabling description for implementing the described embodiments. It being understood that various changes may be made in the function and arrangement of elements without departing from the spirit and scope of the appended claims.

Various aspects of the present disclosure will be described herein with reference to drawings that may be schematic illustrations of idealized configurations.

Pluggable network interface devices, or pluggable network interface modules, generally include a PCB, or circuit substrate, that is at least partially embedded in a housing. Each pluggable network interface device includes at least one heat-generating circuit package such as a clock and data recovery circuit ("CDR"), microcontroller, driver, chips, and/or other circuitry attached to the PCB that generates heat during use, or while in operation. As can be appreciated, the efficient dissipation of heat is critical to ensuring proper operation. For instance, in certain pluggable network interface devices, like Extended Detection and Response ("XDR") transceivers, the device's total power can reach about 35 Watts, and the CDR component alone can reach up to 25 Watts. Consuming this amount of power, especially in small form factor pluggable devices, naturally generates high temperatures and thermal energy (e.g., temperatures at or around 121 °C, etc.).

Conventional heat transfer solutions generally rely on convection and/or conduction cooling methods. To provide this type of cooling a heatsink may be used to enhance the transfer of heat away from the heat-generating components (e.g., heat-generating circuit package, etc.). Most heatsinks are arranged close to heat-generating components to aid in the transfer of heat. Whenever two mechanical parts needs are arranged close to one another as part of a thermal solution there is a thermal challenge. For example, due to certain tolerancing limitations, the heatsink must typically be offset from the surfaces of the heat-generating components and, as such, a gap is formed between the heatsink and the heat-generating components. In an attempt to compensate for the gap, a thermal interface material ("TIM"), or thermally conductive material, may be applied between the heat-dissipating device (e.g., the heatsink) and the heat-producing device (e.g., the heat-generating components). Since the TIM must be able to fill the gap and contact the heatsink and the heat-generating components, the TIM may be polymer, paste, conductive pad, or other compliant material to accommodate the variations in gap size. However, when the mechanical gap is large, the TIM thickness increases and the thermal transfer provided by the TIM decreases and becomes less effective.

By way of example, the thermal resistance (*Rₜₕ*) of a typical component-to-component interface, for conduction, may be defined as the thermal resistance of the materials in contact (*R_{contact}*) plus the thermal resistance associated with the TIM (*R_{TIM}*)*.* The *R_{TIM}*, may be defined as the gap distance (*L*) divided by the product of the cross-sectional area perpendicular to the path of heat flow (*A*) multiplied by the thermal conductivity (*k*) of the TIM. As can be appreciated, the higher the value of the *Rₜₕ*, the higher the gradient and poorer the thermal solution, which results in higher component temperatures of the components. On the other hand, the lower the value of the *Rₜₕ*, the lower the gradient and better the thermal solution, which results in lower component temperatures. As the *R_{TIM}* increases (e.g., by increasing the gap distance (*L*), or overall size of the gap), the larger the value of the *Rₜₕ*. The present disclosure, however, describes arranging the heatsink and the heat-generating circuit package in direct contact with one another thereby eliminating the gap completely. In this manner, the gap distance is zero and, as such, the *R_{TIM}* is zero. Therefore, the *Rₜₕ* equals the *R_{contact}* only and provides a lower thermal resistance and a lower gradient, which results in lower component temperatures for the pluggable network interface devices presently described. Stated another way, the temperatures observed from an indirect contact solution (e.g., of about 120 °C) may be reduced to much lower temperatures (e.g., of about 100 °C, or lower, plus or minus 10 °C, etc.).

As described herein, the pluggable network interface devices, or modules, may be configured with a suitable form factor, for example, a small form factor pluggable ("SFP"), SFP+, quad SFP ("QSFP"), QSFP+, QSFP-double density ("QSFP-DD"), octal SFP ("OSFP"), and/or the like.

It is with respect to the above issues and other problems that the embodiments presented herein were contemplated. Among other things, the present disclosure provides pluggable network interface devices that arrange the heatsink in direct contact with the heat-generating circuit package and that are capable of providing a significant improvement in the ability to conduct heat while using a variety of heat transfer systems (e.g., air cooling, liquid cooling, convection cooling, conduction cooling, combinations thereof, and/or the like). Moreover, the pluggable network interface devices described herein provide the additional benefit of offering direct contact heat transfer solution in an integrated package that conforms with current OSFP specifications and dimensional requirements (e.g., without deviating from the standard predefined sizes set for OSFP devices).

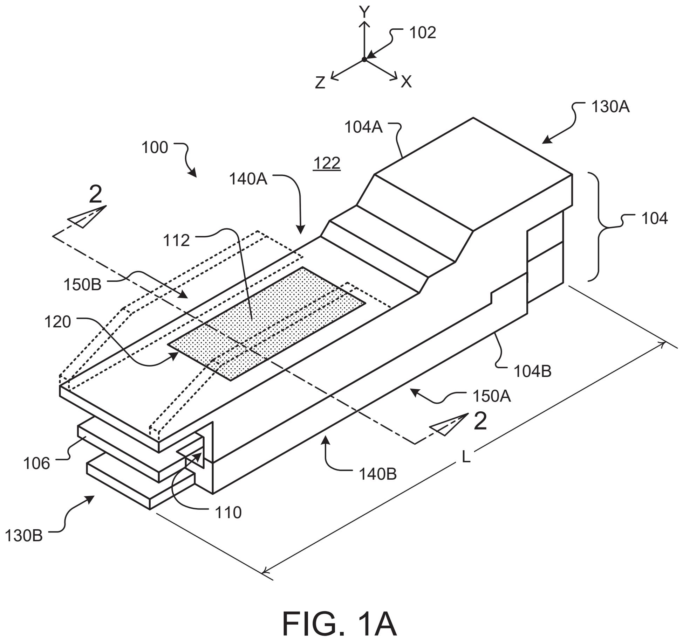

Referring initially to Figs. 1A-1B, perspective views of a pluggable network interface device 100 are shown in accordance with embodiments of the present disclosure. The pluggable network interface device 100 includes a housing 104, a circuit substrate 106 (e.g., a PCB, etc.) with at least one heat-generating circuit package 108, and a heatsink 112 that is arranged in direct contact with the heat-generating circuit package 108. In some embodiments, the pluggable network interface device 100 may be referred to as a pluggable network interface module. The pluggable network interface device 100 may comprise one or more cables. The cables may comprise one or more copper cables, one or more fiber optic cables, and/or any other suitable cable for transmitting and/or receiving data. In a scenario where the cables include fiber optic cables, the pluggable network interface device 100 may include optical transceivers that convert electrical signals into optical signals and optical signals into electrical signals. In one non-limiting example, the pluggable network interface device 100 may comprise a direct attach cable ("DAC") cable assembly with an OSFP connector form factor. Details of the pluggable network interface device 100 are discussed in more detail below with reference to the figures.

Features of the pluggable network interface device 100 may be described in conjunction with a coordinate system 102. The coordinate system 102, as shown in Figs. 1A-1B, includes three-dimensions comprising an X-axis, a Y-axis, and a Z-axis. Additionally or alternatively, the coordinate system 102 may be used to define planes (e.g., the XY-plane, the XZ-plane, and the YZ-plane) of the pluggable network interface device 100. These planes may be disposed orthogonal, or at 90 degrees, to one another. While the origin of the coordinate system 102 may be placed at any point on or near the components of the pluggable network interface device 100, for the purposes of description, the axes of the coordinate system 102 are always disposed along the same directions from figure to figure, whether the coordinate system 102 is shown or not. In some examples, reference may be made to dimensions, angles, directions, relative positions, and/or movements associated with one or more components of the pluggable network interface device 100 with respect to the coordinate system 102. For example, the width of the pluggable network interface device 100 (e.g., running from the first width side 150A to the second width side 150B of the pluggable network interface device 100) may be defined as a dimension along the X-axis of the coordinate system 102, the height of the pluggable network interface device 100 may be defined as a dimension along the Y-axis of the coordinate system 102, and the length, L, of the pluggable network interface device 100 may be defined as a dimension along the Z-axis of the coordinate system 102.

Although not explicitly illustrated, it should be appreciated that the pluggable network interface device 100 may include processing circuitry and/or memory for carrying out computing tasks, for example, tasks associated with controlling the flow of data over a communication network. The processing circuitry may comprise software, hardware, or a combination thereof. For example, the processing circuitry may include a memory including executable instructions and a processor (e.g., a microprocessor) that executes the instructions on the memory. The memory may correspond to any suitable type of memory device or collection of memory devices configured to store instructions. Non-limiting examples of suitable memory devices that may be used include flash memory, Random Access Memory ("RAM"), Read Only Memory ("ROM"), variants thereof, combinations thereof, or the like. In some embodiments, the memory and processor may be integrated into a common device (e.g., a microprocessor may include integrated memory). Additionally or alternatively, the processing circuitry may comprise hardware, such as an application specific integrated circuit ("ASIC"). Other non-limiting examples of the processing circuitry include an Integrated Circuit ("IC") chip, a Central Processing Unit ("CPU"), a General Processing Unit ("GPU"), a microprocessor, a Field Programmable Gate Array ("FPGA"), a collection of logic gates or transistors, resistors, capacitors, inductors, diodes, or the like. Some or all of the processing circuitry may be provided on the circuit substrate 106 of the pluggable network interface device 100. The circuit substrate 106 may correspond to a PCB or a collection of PCBs. It should be appreciated that any appropriate type of electrical component or collection of electrical components may be suitable for inclusion in the processing circuitry.

The housing 104 may be configured as a split-shell housing having a first shell portion 104A and a second shell portion 104B. The first shell portion 104A may be referred to herein as a top shell, or top backshell, and the second shell portion 104B may be referred to herein as a bottom shell, or bottom backshell. The first shell portion 104A may include a first cavity or space that runs along the length, L, of the pluggable network interface device 100. The second shell portion 104B may include a second cavity or space that runs along the length, L, of the pluggable network interface device 100. As provided above, the length, L, of the pluggable network interface device 100 may be measured from a first end 130A to an opposite second end 130B of the pluggable network interface device 100. Together, the first cavity and the second cavity form a receiving cavity 110 of the pluggable network interface device 100. The receiving cavity 110 may be sized to receive at least a portion of the circuit substrate 106 including at least one heat-generating circuit package 108. For instance, the circuit substrate 106 may be placed inside the first cavity and/or the second cavity and the first shell portion 104A may be attached (e.g., clipped, fastened, pinned, etc., and/or combinations thereof) to the second shell portion 104B forming the pluggable network interface device 100. When attached to one another, a height of the housing 104 and/or the pluggable network interface device 100 may be measured from a surface of the first shell portion 104A that is disposed adjacent the first height side 140A to a surface of the second shell portion 104B that is disposed adjacent the second height side 140B. The outer surface of the housing 104 may provide an outer shell that defines the exterior of the housing 104. In some embodiments, the outer shell separates the receiving cavity 110 from the exterior 122 of the housing 104 (e.g., separating an interior of the pluggable network interface device 100 from the environment that is exterior to the housing 104).

The pluggable network interface device 100 includes a heatsink 112 that is arranged in direct contact with the heat-generating circuit package 108. The heatsink 112 includes a first surface 116A on one side of the heatsink 112 and a second surface 116B disposed on an opposite side of the heatsink 112 (e.g., opposite the first surface 116A). The first surface 116A is offset a thickness from the second surface 116B. The first surface 116A may be arranged at an exterior 122 of the housing 104 and the second surface 116B may be arranged in direct contact with the outer surface 109 of the heat-generating circuit package 108 of the circuit substrate 106. For instance, the first surface 116A may be arranged in an aperture 120 of the housing 104 that extends through the first shell portion 104A from the exterior 122 of the housing 104 into the receiving cavity 110 of the pluggable network interface device 100. The aperture 120 may correspond to an opening where the first surface 116A of the heatsink 112 is disposed adjacent, and exposed to, the exterior 122. In this arrangement a heat transfer path (e.g., via conduction, etc.) is provided from the outer surface 109 of the heat-generating circuit package 108 to the second surface 116B (e.g., via direct contact) and through the thickness of the heatsink 112 to the second surface 116B that is disposed outside of the receiving cavity 110 of the pluggable network interface device 100. The heat transfer path may provide a "zero gap" conduction path that does not include TIM between the heat-generating circuit package 108 and the heatsink 112. As can be appreciated, since there is no TIM between the heat-generating circuit package 108 and the heatsink 112, the *Rₜₕ* equals the *R_{contact}* only and provides a low thermal resistance and a low gradient for the pluggable network interface device 100 described herein.

The heatsink 112 may be arranged including a flange, ledge, or other outer peripheral protrusion extending from a periphery thereof. The outer peripheral protrusion may provide a surface that retains the second surface 116B of the heatsink 112 inside the receiving cavity 110. In some embodiments, a thermal putty, gasket, O-ring, room temperature vulcanizing ("RTV") sealant, etc., and/or some other type of compliant seal may be arranged between the outer peripheral protrusion and/or a periphery of the heatsink 112 and the first shell portion 104A. The compliant seal may provide a watertight, airtight, or hermetic seal between the receiving cavity 110 and the exterior 122 around a periphery (e.g., outermost periphery, etc.) of the heatsink 112 and the aperture 120. Additionally or alternatively, the compliant seal may provide a cushioned interface between the heatsink 112 and the first shell portion 104A. This cushioned interface may accommodate dimensional changes (e.g., due to thermal expansion and contraction, etc.) of the height of components of the pluggable network interface device 100 during operation, etc. In some embodiments, the cushioned interface may accommodate differences in height dimensions of components of the pluggable network interface device 100 due to tolerancing, machining, forming, and/or assembly processes.

The heatsink 112 may be held, or maintained, against the heat-generating circuit package 108 of the circuit substrate 106 by at least one spring 118. More specifically, the second surface 116B of the heatsink 112 may be held in direct contact with the outer surface 109 of the heat-generating circuit package 108 by a clamp force provided by the spring 118. The spring 118 may be configured as an extension spring, compression spring, helical spring, leaf spring, spring clip, torsion spring, spiral spring, die spring, disk spring, wave spring, flat spring, combinations thereof, and/or the like. In any event, the spring 118 may maintain a clamp force and the direct contact between the second surface 116B of the heatsink 112 and the outer surface 109 of the at least one heat-generating circuit package 108.

In some embodiments, the heatsink 112 may be mounted in direct contact with the heat-generating circuit package 108 (e.g., via the spring 118, etc.) prior to inserting the circuit substrate 106, heat-generating circuit package 108, and the heatsink 112 into the receiving cavity 110 of the pluggable network interface device 100. Stated another way, the circuit substrate 106, the heat-generating circuit package 108, and the heatsink 112 may be connected together and held in a clamped state by the spring 118 as a subassembly before the subassembly is attached to the housing 104 of the pluggable network interface device 100. By way of example, the subassembly may be positioned inside a portion of the receiving cavity 110 in the second shell portion 104B and then the first shell portion 104A may be attached to the second shell portion 104B. Before the first shell portion 104A is attached to the second shell portion 104B, the first surface 116A of the heatsink 112 may be aligned with the aperture 120 in the first shell portion 104A. Then, as the first shell portion 104A and the second shell portion 104B are moved into contact with one another, the first surface 116A may be caused to enter into the aperture 120 exposing the first surface 116A to the exterior 122.

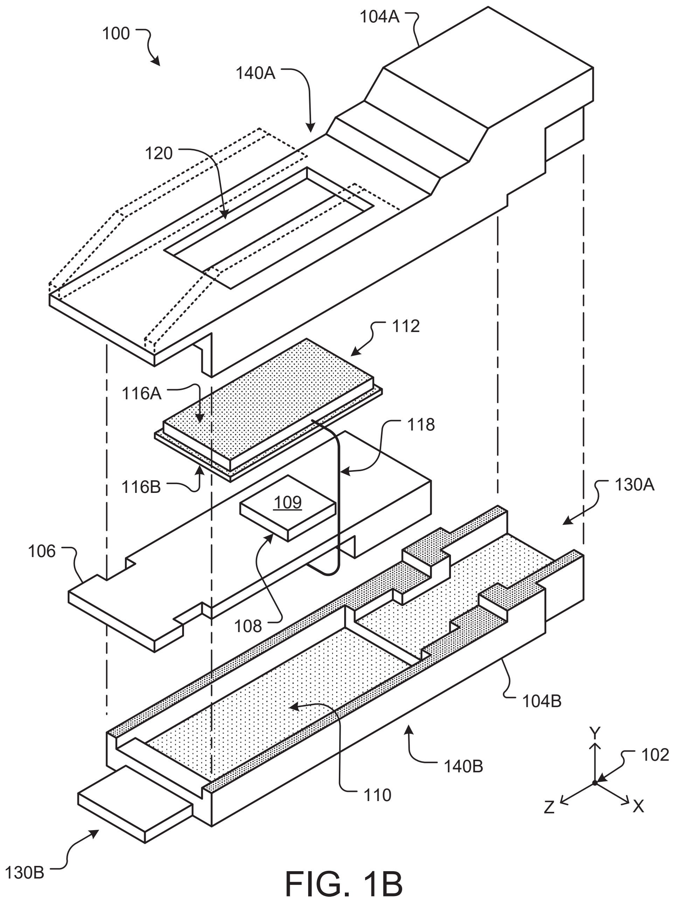

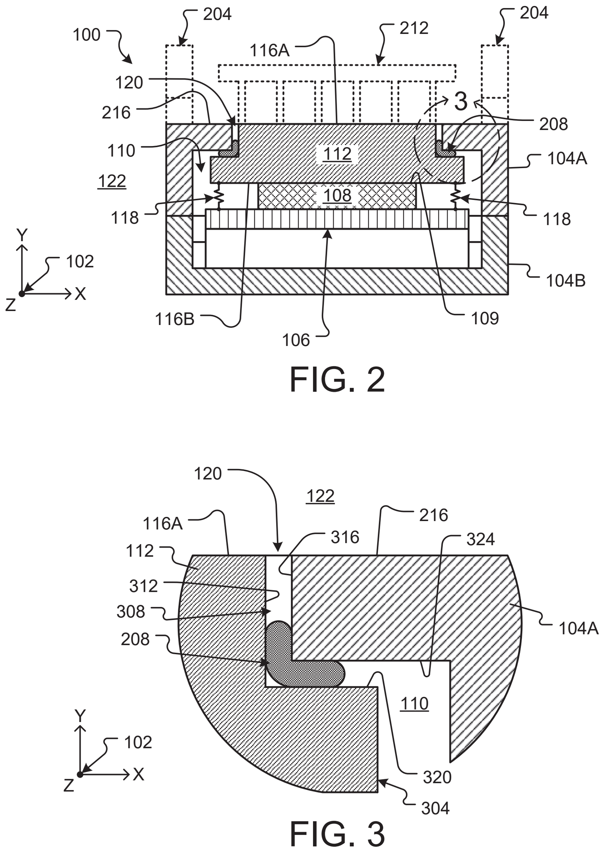

Fig. 2 shows a section view taken through line "2-2" of Fig. 1 in accordance with embodiments of the present disclosure. As illustrated in Fig. 2, the pluggable network interface device 100 may include one or more extended width walls 204 of the first shell portion 104A and/or an extended heatsink portion 212 of the heatsink 112. Stated another way, the direct contact heat transfer arrangement of the pluggable network interface device 100 is not particularly limited to the arrangement of the pluggable network interface device 100. For example, the direct contact heat transfer arrangement may be employed in OSFP integrated heatsink ("IHS") modules, OSFP riding heatsink ("RHS") modules, and/or the like. In some embodiments, the first surface 116A may be flush with, or in the same plane as, the outermost height surface 216 of the first shell portion 104A. In one embodiment, the first surface 116A may be under flush with, or below the plane of, the outermost height surface 216 of the first shell portion 104A.

The second surface 116B of the heatsink 112 is shown in direct contact with the outer surface 109 of the heat-generating circuit package 108. The term "direct contact" may be used herein to refer to a surface-to-surface contact between the heatsink 112 and the heat-generating circuit package 108 without disposing a TIM, paste, or some other interstitial element between the second surface 116B and the outer surface 109 of the heat-generating circuit package 108.

A compliant seal 208 is shown disposed between the heatsink 112 and the first shell portion 104A. The compliant seal 208 may be compressed between the heatsink 112 and the housing 104. This compression may form an airtight seal between the exterior of the housing and the receiving cavity. In some embodiments, the compliant seal 208 may surround a periphery of the aperture 120 and the portion of the heatsink 112 that is disposed inside the aperture 120. As shown in Fig. 3, the compliant seal 208 may be arranged in a peripheral gap 308 that is disposed between the vertical heatsink surface 312 of the portion of the heatsink 112 disposed in the aperture 120 and the internal vertical surface 316 of the aperture 120. Additionally or alternatively, the compliant seal 208 may be arranged around the periphery of the aperture 120 between the horizontal surface 320 of the flange 304 of the heatsink 112 and the internal horizontal surface 324 of the first shell portion 104A of the housing 104. In any event, the compliant seal 208 may form an airtight or watertight seal between the receiving cavity 110 and the exterior 122 of the housing 104.

The spring 118 in Fig. 2 is schematically shown as providing a clamp force between the heatsink 112 and the heat-generating circuit package 108. The at least one spring 118 may be mounted in any arrangement inside the receiving cavity 110 of the pluggable network interface device 100 that is capable of maintaining the second surface 116B of the heatsink 112 in direct contact with the outer surface 109 of the heat-generating circuit package 108.

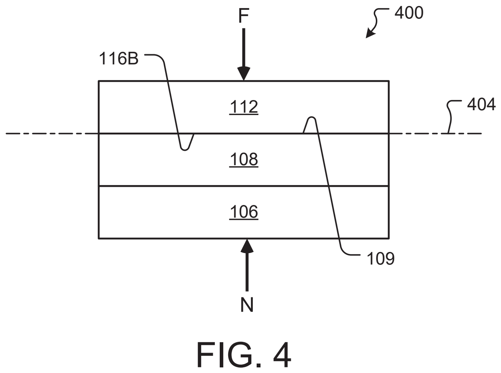

Fig. 4 shows an example of a schematic force block diagram 400 of the direct contact heatsink 112 arrangement of the pluggable network interface device 100 as described herein. As illustrated in Fig. 4, the heatsink 112 of the pluggable network interface device 100 is maintained in direct contact with the heat-generating circuit package 108 via a clamping force represented by the clamp force, F, and the opposing normal force, N. More specifically, the second surface 116B of the heatsink 112 is maintained in direct contact with the outer surface 109 of the heat-generating circuit package 108 along the direct contact plane 404. In this arrangement, no other component is disposed between the second surface 116B and the heat-generating circuit package 108. Among other things, this arrangement provides a zero gap interface and enhanced conduction heat transfer path between the heatsink 112 and the heat-generating circuit package 108 for the pluggable network interface device 100.

In the following description, certain features, elements, and structures having the same configuration and/or the same function as those of the pluggable network interface device 100 described above may be designated by the same reference numeral and, as such, a detailed description of those features, elements, and/or structures is omitted for the sake of brevity.

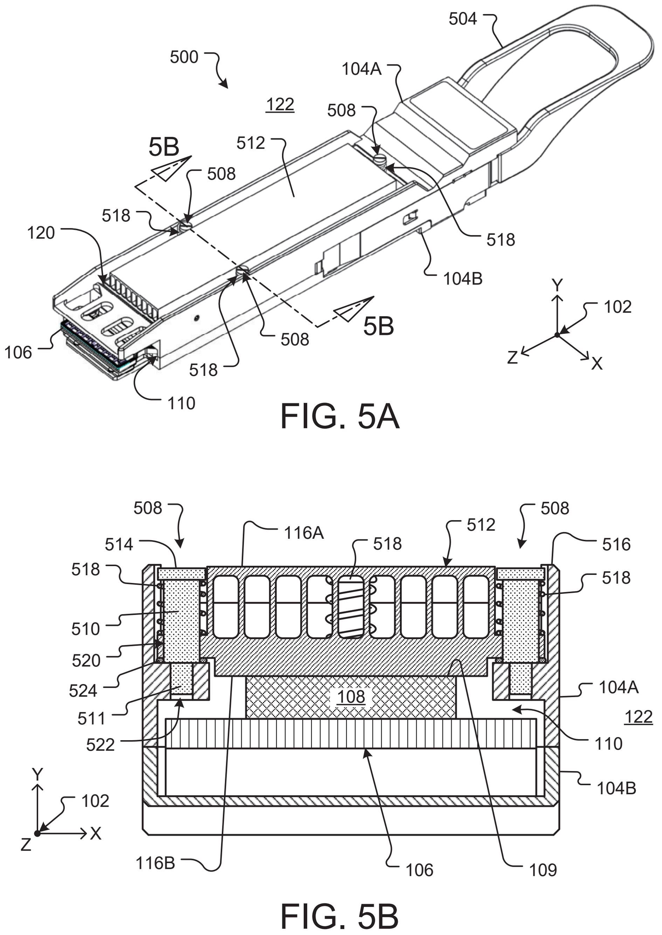

Referring now to Figs. 5A and 5B, a pluggable network interface device 500 is shown in accordance with embodiments of the present disclosure. The pluggable network interface device 500 may correspond to the pluggable network interface device 100 described in conjunction with Figs. 1A-4. For instance, the pluggable network interface device 500 includes a heatsink 512 (e.g., similar, if not identical, to the heatsink 112) having a second surface 116B that is arranged in direct contact with the outer surface 109 of the heat-generating circuit package 108 of the circuit substrate 106. The pluggable network interface device 500 may include a first clamping arrangement between the heatsink 512 and the heat-generating circuit package 108.

A perspective view of the pluggable network interface device 500 is shown in Fig. 5A. In some embodiments, the pluggable network interface device 500 may include a pull tab 504. The pull tab 504 may include a handle portion and/or aperture that can be grasped when handling, plugging, or unplugging the pluggable network interface device 500 with a receiving connection. The pluggable network interface device 500 may include plurality of fasteners 508 and springs 518 that provide the clamp force between the heatsink 512 and the heat-generating circuit package 108.

As illustrated in the section view of Fig. 5B (taken through line "5B-5B" of Fig. 5A), the fastener 508 may comprise a body 510 extending from a first end of the fastener 508 to a second end of the fastener 508. The body 510 may include a threaded portion 511 adjacent the second end of the fastener 508 and a cap portion 514 adjacent the first end of the fastener 508. In some embodiments, the fastener 508 may correspond to a shoulder screw where the body 510 is configured as a cylindrical unthreaded portion. The fastener 508 may be attached to the housing 104 via the threaded portion 511 threadedly engaging with a threaded hole 522 disposed in the first shell portion 104A of the housing 104. The heatsink 512 may include clearance holes 520 positioned at the locations of the fasteners 508. The clearance hole may allow the heatsink 512 to translate (e.g., in the Y-axis direction) but remain constrained in the X-axis and Z-axis directions. A spring 518 may be arranged between the cap portion 514 of each fastener 508 and the heatsink 512. The spring 518 may correspond to the spring 118 as described above. In some embodiments, each spring 518 may correspond to a compression spring that surrounds the body 510 of an associated fastener 508. The spring 518 may provide a spring force between the cap portion 514 of a fastener 508 and the heatsink 512. This spring force may bias, maintain, or clamp the heatsink 512 against the heat-generating circuit package 108 (e.g., in the negative Y-axis direction) such that the second surface 116B of the heatsink 512 is arranged in direct contact with the outer surface 109 of the heat-generating circuit package 108 of the circuit substrate 106.

The pluggable network interface device 500 may include a compliant seal 524 that surrounds the periphery of the aperture 120. The compliant seal 524 may correspond to the compliant seal 208 described above. As illustrated in Fig. 5B, the compliant seal 524 is disposed between the heatsink 512 and the first shell portion 104A providing an airtight seal between the receiving cavity 110 and the exterior 122 of the housing 104.

The first surface 116A of the heatsink 512 may be arranged flush, or under flush, with the outermost height surface 516 of the pluggable network interface device 500. In some embodiments, the first surface 116A may be prevented from extending above the outermost height surface 516 of the pluggable network interface device 500 (e.g., in the Y-axis direction). Among other things, this arrangement may ensure that the dimensions of the pluggable network interface device 500 comport with OSFP standards.

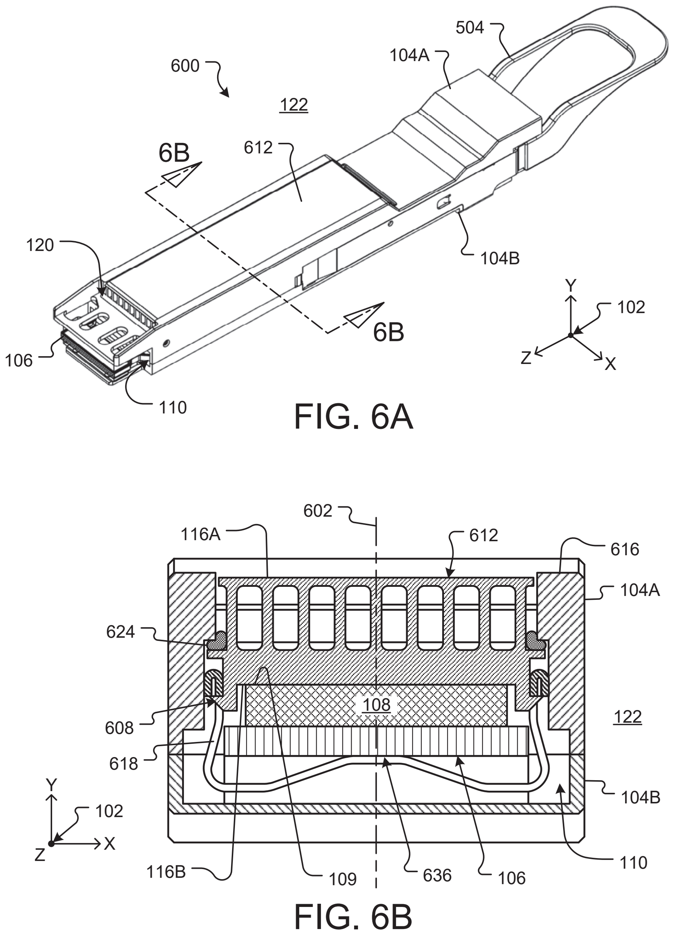

Figs. 6A-6C show various views of a pluggable network interface device 600 and components thereof in accordance with embodiments of the present disclosure. The pluggable network interface device 600 may correspond to the pluggable network interface device 100 described in conjunction with Figs. 1A-4. For instance, the pluggable network interface device 600 includes a heatsink 612 (e.g., similar, if not identical, to the heatsink 112) having a second surface 116B that is arranged in direct contact with the outer surface 109 of the heat-generating circuit package 108 of the circuit substrate 106. The pluggable network interface device 600 may include a second clamping arrangement between the heatsink 612 and the heat-generating circuit package 108.

A perspective view of the pluggable network interface device 600 is shown in Fig. 6A. In some embodiments, the pluggable network interface device 600 may include a pull tab 504. The pluggable network interface device 600 may include a clip type of spring 618 (e.g., spring clip) that provides the clamp force between the heatsink 612 and the heat-generating circuit package 108.

As illustrated in the section view of Fig. 6B (taken through line "6B-6B" of Fig. 6A), the spring 618 may be configured as a bent, or shaped, clip that engages with one or more tabs 608 of the heatsink 612. The spring 618 may correspond to the spring 118 as described above. In addition to contacting the tabs 608 of the heatsink 612, the spring 618 may simultaneously contact the circuit substrate 106. For instance, the spring 618 may wrap around a portion of the circuit substrate 106 and contact a center portion of the circuit substrate 106 (e.g., located along the centerline 602 of the pluggable network interface device 600). In some embodiments, the pluggable network interface device 600 and/or the components thereof may be symmetrical about the centerline 602.

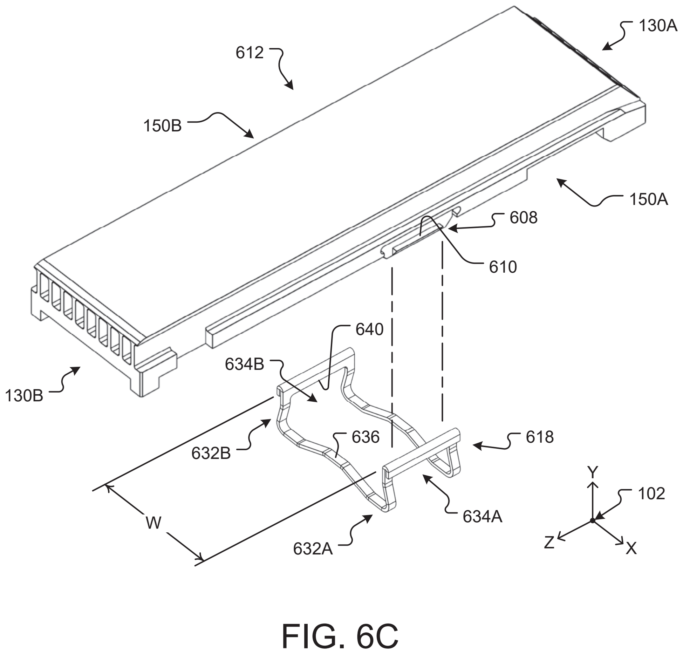

Fig. 6C shows an exploded perspective view of the heatsink 612 and the spring 618 shown in Fig. 6B. The spring 618 may include a first leg 632A including a first slot 634A and a second leg 632B including a second slot 634B. The second leg 632B may be disposed offset a width distance, W, from the first leg 632A. The spring 618 may include a center portion 636 (e.g., center spring contact portion) that is disposed between, and joins, the first leg 632A and the second leg 632B. In some embodiments, the spring 618 may include a spanning surface 640 that extends along the Z-axis direction on the first leg 632A and second leg 632B. The spanning surface 640 may correspond to a clip surface that engages with the ledge surface 610 of the tab 608. For instance, the spanning surface 640 of the first leg 632A may engage with the ledge surface 610 of the tab 608 disposed on the first width side 150A of the pluggable network interface device 600. The spanning surface 640 of the second leg 632B may engage with the ledge surface 610 of the tab 608 disposed on the second width side 150B of the pluggable network interface device 600. In any event, the spring 618 maintains the second surface 116B of the heatsink 612 in direct contact with the outer surface 109 of the at least one heat-generating circuit package 108.

As shown in Fig. 6B, the spring 618 may provide the clamp force that biases, maintains, or clamps the heatsink 612 against the heat-generating circuit package 108 (e.g., in the negative Y-axis direction) such that the second surface 116B of the heatsink 612 is arranged in direct contact with the outer surface 109 of the heat-generating circuit package 108 of the circuit substrate 106. The pluggable network interface device 600 may include a compliant seal 624 that surrounds the periphery of the aperture 120. The compliant seal 624 may correspond to the compliant seal 208 described above. As illustrated in Fig. 6B, the compliant seal 624 is disposed between the heatsink 612 and the first shell portion 104A providing an airtight seal between the receiving cavity 110 and the exterior 122 of the housing 104.

The first surface 116A of the heatsink 612 may be arranged flush, or under flush, with the outermost height surface 616 of the pluggable network interface device 600. In some embodiments, the first surface 116A may be prevented from extending above the outermost height surface 616 of the pluggable network interface device 600 (e.g., in the Y-axis direction). Among other things, this arrangement may ensure that the dimensions of the pluggable network interface device 600 comport with OSFP standards (e.g., IHS OSFP module standards, etc.).

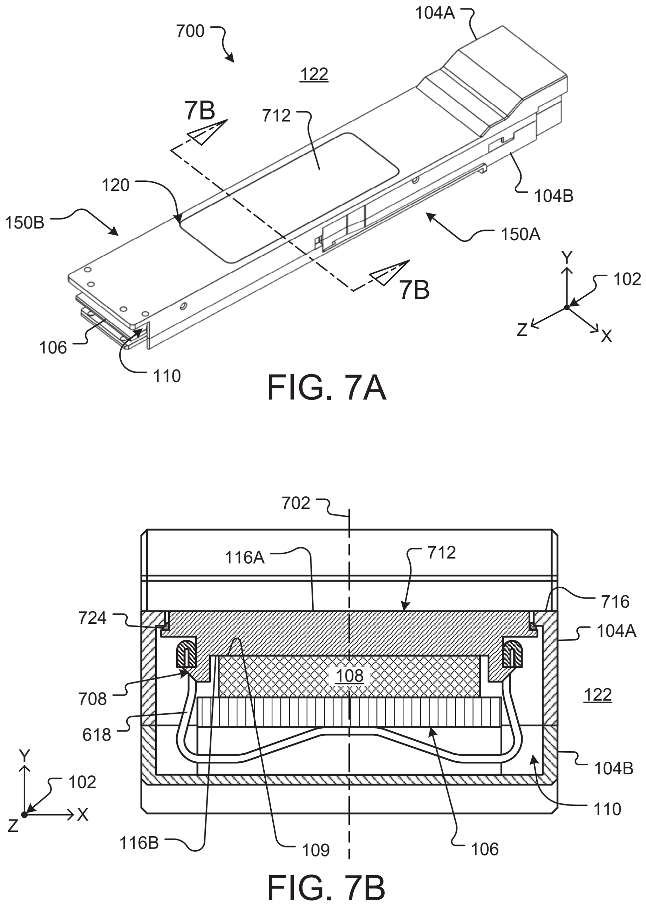

Figs. 7A and 7B show a pluggable network interface device 700 and components thereof in accordance with embodiments of the present disclosure. The pluggable network interface device 700 may correspond to the pluggable network interface device 100 described in conjunction with Figs. 1A-4. For instance, the pluggable network interface device 700 includes a heatsink 712 (e.g., similar, if not identical, to the heatsink 112) having a second surface 116B that is arranged in direct contact with the outer surface 109 of the heat-generating circuit package 108 of the circuit substrate 106. The pluggable network interface device 700 may include the same clamping arrangement as described above in conjunction with Figs. 6A-6C.

A perspective view of the pluggable network interface device 700 is shown in Fig. 7A. The pluggable network interface device 700 may correspond to an RHS OSFP module, while the pluggable network interface device 600 may correspond to an IHS OSFP module. In any event, the pluggable network interface device 700 shown in Figs. 7A and 7B may include the same clip type of spring 618 (e.g., spring clip) that provides the clamp force between the heatsink 712 and the heat-generating circuit package 108 of the circuit substrate 106.

As shown in the section view of Fig. 7B (taken through line "7B-7B" of Fig. 7A), the spring 618 may be configured as a bent, or shaped, clip that engages with one or more tabs 708 of the heatsink 712. The spring 618 may correspond to the spring 118 as described above. In addition to contacting the tabs 708 of the heatsink 712, the spring 618 may simultaneously contact the circuit substrate 106. For instance, the spring 618 may wrap around a portion of the circuit substrate 106 and contact a center portion of the circuit substrate 106 (e.g., located along the centerline 702 of the pluggable network interface device 800). In some embodiments, the pluggable network interface device 700 and/or the components thereof may be symmetrical about the centerline 702.

The spanning surface 640 of the spring 618 (e.g., shown in Fig. 6C) may correspond to a clip surface that engages with a ledge surface of the tab 708. The ledge surface of the tab 708 of the heatsink 712 may be the same as the ledge surface 610 of the tab 608 shown in Fig. 6C. Similar to the engagement of the spring 618 described above, the spanning surface 640 of the first leg 632A of the spring 618 may engage with the ledge surface of the tab 708 disposed on the first width side 150A of the pluggable network interface device 700 and the spanning surface 640 of the second leg 632B may engage with the ledge surface of the tab 708 disposed on the second width side 150B of the pluggable network interface device 700. The spring 618 maintains the second surface 116B of the heatsink 712 in direct contact with the outer surface 109 of the at least one heat-generating circuit package 108 of the pluggable network interface device 700.

As shown in Fig. 7B, the spring 618 may provide the clamp force that biases, maintains, or clamps the heatsink 712 against the heat-generating circuit package 108 (e.g., in the negative Y-axis direction) such that the second surface 116B of the heatsink 712 is arranged in direct contact with the outer surface 109 of the heat-generating circuit package 108 of the circuit substrate 106. The pluggable network interface device 700 may include a compliant seal 724 that surrounds the periphery of the aperture 120. The compliant seal 724 may correspond to the compliant seal 208, or the compliant seal 624, described above. As illustrated in Fig. 7B, the compliant seal 624 is disposed between the heatsink 712 and the first shell portion 104A providing an airtight seal between the receiving cavity 110 and the exterior 122 of the housing 104.

The first surface 116A of the heatsink 712 may be arranged flush, or under flush, with the outermost height surface 716 of the pluggable network interface device 700. In some embodiments, the first surface 116A may be prevented from extending above the outermost height surface 716 of the pluggable network interface device 700 (e.g., in the Y-axis direction). Among other things, this arrangement may ensure that the dimensions of the pluggable network interface device 700 comport with OSFP standards (e.g., RHS OSFP module standards, etc.).

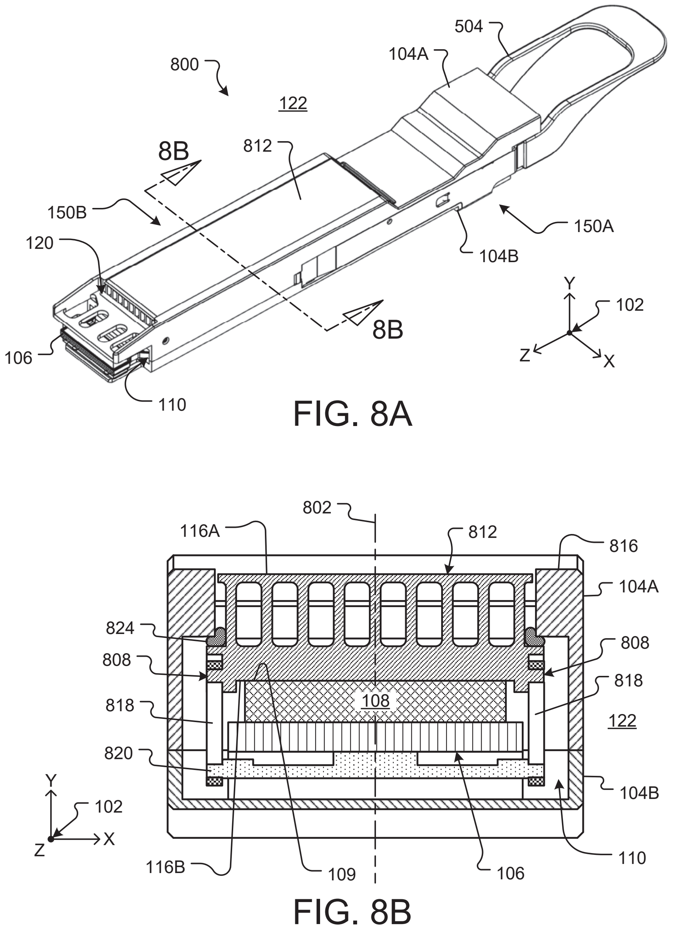

Figs. 8A-8D show various views of a pluggable network interface device 800 and components thereof in accordance with embodiments of the present disclosure. The pluggable network interface device 800 may correspond to the pluggable network interface device 100 described in conjunction with Figs. 1A-4. For instance, the pluggable network interface device 800 includes a heatsink 812 (e.g., similar, if not identical, to the heatsink 112) having a second surface 116B that is arranged in direct contact with the outer surface 109 of the heat-generating circuit package 108 of the circuit substrate 106. The pluggable network interface device 800 may include a third clamping arrangement between the heatsink 812 and the heat-generating circuit package 108.

A perspective view of the pluggable network interface device 800 is shown in Fig. 8A. In some embodiments, the pluggable network interface device 800 may include a pull tab 504. The pluggable network interface device 800 may include two clip types of springs 818 (e.g., spring clips) that provide the clamp force between the heatsink 812 and the heat-generating circuit package 108.

As illustrated in the section view of Fig. 8B (taken through line "8B-8B" of Fig. 8A), the springs 818 may be configured as shaped clips that engage with the spring support posts 808 of the heatsink 812. The spring support post 808 may be configured as a post protrusion that extends from the heatsink 812 in the X-axis direction. For instance, a spring 818 on the first width side 150A may be attached to a spring support post 808 extending from the heatsink 812 in a direction from the center of the pluggable network interface device 800 toward the first width side 150A. A spring 818 on the second width side 150B may be attached to a spring support post 808 extending from the heatsink 812 in a direction from the center of the pluggable network interface device 800 toward the second width side 150B. The spring 818 may correspond to the spring 118 as described above. In addition to contacting the spring support posts 808 of the heatsink 812, the springs 818 may simultaneously contact a portion of a clamp plate 820 that is arranged under the circuit substrate 106. Stated another way, the circuit substrate 106 and the heat-generating circuit package 108 may be sandwiched between the heatsink 812 and the clamp plate 820, while the spring 818 provide the clamp force holding the second surface 116B of the heatsink 812 against the outer surface 109 of the heat-generating circuit package 108. In some embodiments, the pluggable network interface device 800 and/or the components thereof may be symmetrical about the centerline 802.

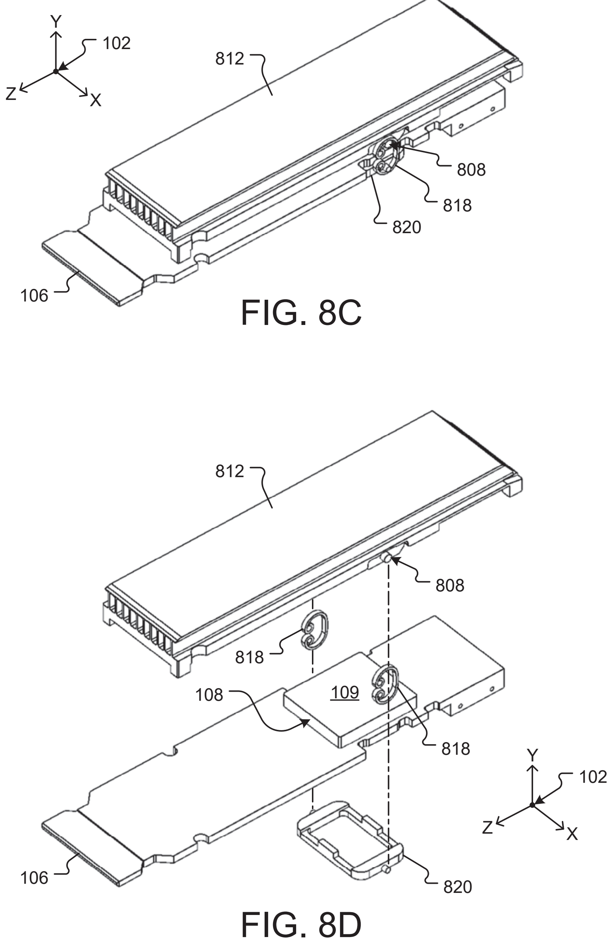

Fig. 8C shows a perspective view of the heatsink 812 maintained in a clamped state against the heat-generating circuit package 108 by the spring 818 and the clamp plate 820 without the other components of the pluggable network interface device 800 shown, for clarity. This arrangement may be referred to herein as the direct contact thermal transfer subassembly. Although only one side of the subassembly is shown in Fig. 8C, it should be appreciated that the opposing side (e.g., the second width side 150B) may be symmetrical about the centerline 802 shown in Fig. 8B and, as such, may include the mirrored arrangement of components shown in Fig. 8C.

Fig. 8D shows an exploded perspective view of the components making up the subassembly shown in Fig. 8C. The springs 818 may be made from spring steel and/or some other metal capable of providing a clamping force between the heatsink 812 and the heat-generating circuit package 108 (e.g., via clamping the circuit substrate 106 and the heat-generating circuit package 108 between the heatsink 812 and the clamp plate 820). In some embodiments, the spring 818 may be hooked onto the spring support post 808 of the heatsink 812 at a first end of the spring 818 and then the spring 818 may be hooked onto the clamp plate 820 at a second end of the spring when the circuit substrate 106 and heat-generating circuit package 108 is disposed between the heatsink 812 and the clamp plate 820. The clamp plate 820 may be configured to apply the force from the springs 818 against the bottom surface of the circuit substrate 106 at a center of the pluggable network interface device 800 (e.g., along the centerline 802) under a location of the heat-generating circuit package 108. In any event, the springs 818 maintain the second surface 116B of the heatsink 812 in direct contact with the outer surface 109 of the at least one heat-generating circuit package 108 via a clamping force.

As shown in Fig. 8B, the springs 818 may provide the clamp force that biases, maintains, or clamps the heatsink 812 against the heat-generating circuit package 108 (e.g., in the negative Y-axis direction) such that the second surface 116B of the heatsink 812 is arranged in direct contact with the outer surface 109 of the heat-generating circuit package 108 of the circuit substrate 106. The pluggable network interface device 800 may include a compliant seal 824 that surrounds the periphery of the aperture 120. The compliant seal 824 may correspond to the compliant seal 208 described above. As illustrated in Fig. 8B, the compliant seal 824 is disposed between the heatsink 812 and the first shell portion 104A providing an airtight seal between the receiving cavity 110 and the exterior 122 of the housing 104.

The first surface 116A of the heatsink 812 may be arranged flush, or under flush, with the outermost height surface 816 of the pluggable network interface device 800. In some embodiments, the first surface 116A may be prevented from extending above the outermost height surface 616 of the pluggable network interface device 800 (e.g., in the Y-axis direction). Among other things, this arrangement may ensure that the dimensions of the pluggable network interface device 600 comport with OSFP standards (e.g., IHS OSFP module standards, etc.).

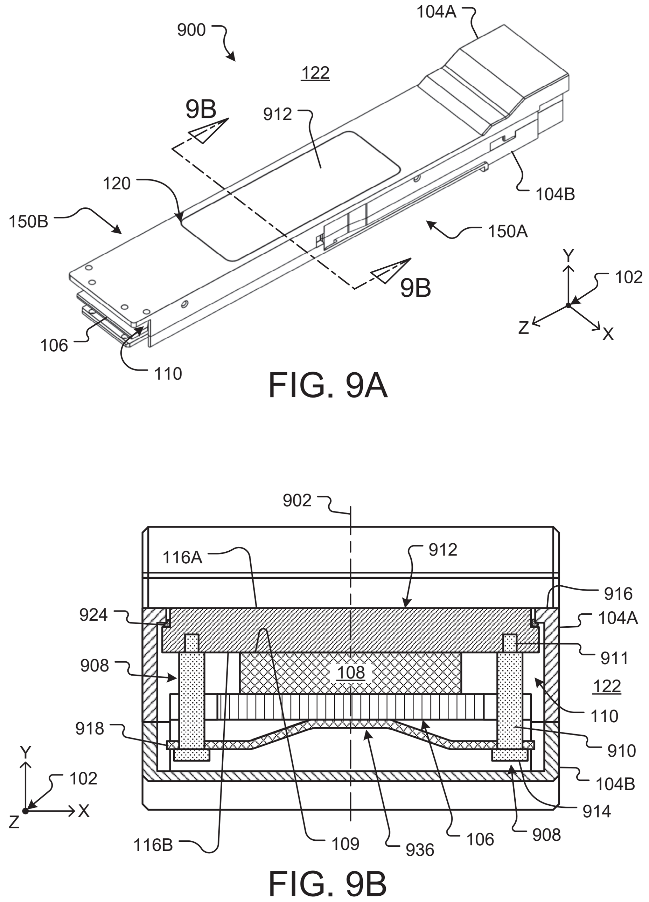

Referring to Figs. 9A and 9B, views of a pluggable network interface device 900 and components thereof are shown in accordance with embodiments of the present disclosure. The pluggable network interface device 900 may correspond to the pluggable network interface device 100 described in conjunction with Figs. 1A-4. For instance, the pluggable network interface device 900 includes a heatsink 912 (e.g., similar, if not identical, to the heatsink 112) having a second surface 116B that is arranged in direct contact with the outer surface 109 of the heat-generating circuit package 108 of the circuit substrate 106. The pluggable network interface device 900 may include a fourth clamping arrangement between the heatsink 912 and the heat-generating circuit package 108.

A perspective view of the pluggable network interface device 900 is shown in Fig. 9A. The pluggable network interface device 900 may correspond to an RHS OSFP module. The pluggable network interface device 900 may include a plate type of spring 918 (e.g., leaf spring, etc.) that provides the clamp force between the heatsink 912 and the heat-generating circuit package 108.

As illustrated in the section view of Fig. 9B (taken through line "9B-9B" of Fig. 9A), the spring 918 may be configured as a bent, or shaped, plate including a contact bend 936 that engages with the circuit substrate 106 and two outer portions that engage with standoffs 908 that are attached to the heatsink 912. A first standoff 908 may be disposed on a first width side 150A of the heatsink 912 and a second standoff 908 may be disposed on a second width side 150B of the heatsink 912. A width portion of the circuit substrate 106 may be disposed between the two standoffs 908. The spring 918 may be configured as a plate extending from the one of the standoffs 908 to the other of the standoffs 908. The spring 918 may be attached, or fastened, to one standoff 908 at a first point and attached, or fastened, to a second standoff 908 at a second point. The spring 918 may include a bend (e.g., a contact bend 936) disposed between the first point and the second point that extends in a direction toward the circuit substrate 106. The contact bend 936 may contact the circuit substrate 106 at a center area of the circuit substrate 106 (e.g., disposed between the first point and the second point) along the centerline 902 of the pluggable network interface device 900. The contact bend 936 and the contact of the spring 918 with the standoffs 908 may maintain the second surface 116B in direct contact with the outer surface 109 of the at least one heat-generating circuit package 108 of the circuit substrate 106. In some embodiments, the pluggable network interface device 900 and/or the components thereof may be symmetrical about the centerline 902.

As illustrated in Fig. 9B, the spring 918 may provide the clamp force that biases, maintains, or clamps the heatsink 912 against the heat-generating circuit package 108 (e.g., in the negative Y-axis direction) such that the second surface 116B of the heatsink 912 is arranged in direct contact with the outer surface 109 of the heat-generating circuit package 108 of the circuit substrate 106. For example, the standoff 908 may correspond to a shoulder screw, machine screw, or fastener including a body 910 extending from a first end of the standoff 908 to a second end of the standoff 908. The body 910 may include a threaded portion 911 adjacent the second end of the standoff 908 and a cap portion 914 adjacent the first end of the standoff 908. In some embodiments, the body 910 of the standoff 908 may be configured as a cylindrical unthreaded portion. Each standoff 908 may be attached to the heatsink 912 via a threaded portion 911 threadedly engaging with a corresponding threaded hole disposed in the heatsink 912. The spring 918 may include clearance holes that engage with the body 910 of the standoff 908 and the cap portion 914 may compress the spring 918 (e.g., the contact bend 936) against the circuit substrate 106. While the clearance holes may allow the spring 918 to move in a direction along the positive Y-axis direction, the cap portion 914 may prevent movement of the spring 918 in the negative Y-axis direction. In some embodiments, the interface between the standoffs 908 and the clearance holes in the spring 918 may constrain movement of the spring 918 in the X-axis and Z-axis directions. In any event, the spring 918 maintains the second surface 116B of the heatsink 912 in direct contact with the outer surface 109 of the at least one heat-generating circuit package 108 of the circuit substrate 106 via a clamping force.

The pluggable network interface device 900 may include a compliant seal 924 that surrounds the periphery of the aperture 120. The compliant seal 924 may correspond to the compliant seal 208 described above. As illustrated in Fig. 9B, the compliant seal 924 is disposed between the heatsink 912 and the first shell portion 104A providing an airtight seal between the receiving cavity 110 and the exterior 122 of the housing 104.

The first surface 116A of the heatsink 912 may be arranged flush, or under flush, with the outermost height surface 916 of the pluggable network interface device 900. In some embodiments, the first surface 116A may be prevented from extending above the outermost height surface 916 of the pluggable network interface device 900 (e.g., in the Y-axis direction). Among other things, this arrangement may ensure that the dimensions of the pluggable network interface device 900 comport with OSFP standards (e.g., RHS OSFP module standards, etc.).

In each of the clamping arrangements described, the pluggable network interface devices 100, 500, 600, 700, 800, 900 described herein include a heatsink 112, 512, 612, 712, 812, 912, having a first surface 116A that is arranged adjacent the exterior 122 of the housing 104 and a second surface 116B that is arranged in direct contact with the outer surface 109 of the at least one heat-generating circuit package 108 of the circuit substrate 106. The pluggable network interface devices 100, 500, 600, 700, 800, 900 each include at least one spring 118, 518, 618, 818, 918 that maintains a clamp force and the direct contact between the second surface 116B and the outer surface 109 of the heat-generating circuit package 108. In some embodiments, the pluggable network interface devices 100, 500, 600, 700, 800, 900 include a compliant seal 208, 524, 624, 724, 824, 924 arranged between a portion of the heatsinks 112, 512, 612, 712, 812, 912 and the aperture 120 of the first shell portion 104A of the housing 104. The compliant seals 208, 524, 624, 724, 824, 924 surround a periphery of the aperture 120 and a portion of the heatsinks 112, 512, 612, 712, 812, 912. Among other things, the compliant seals 208, 524, 624, 724, 824, 924 may be configured to form an airtight or watertight seal between the exterior 122 of the housing 104 and the receiving cavity 110 of the housing 104.

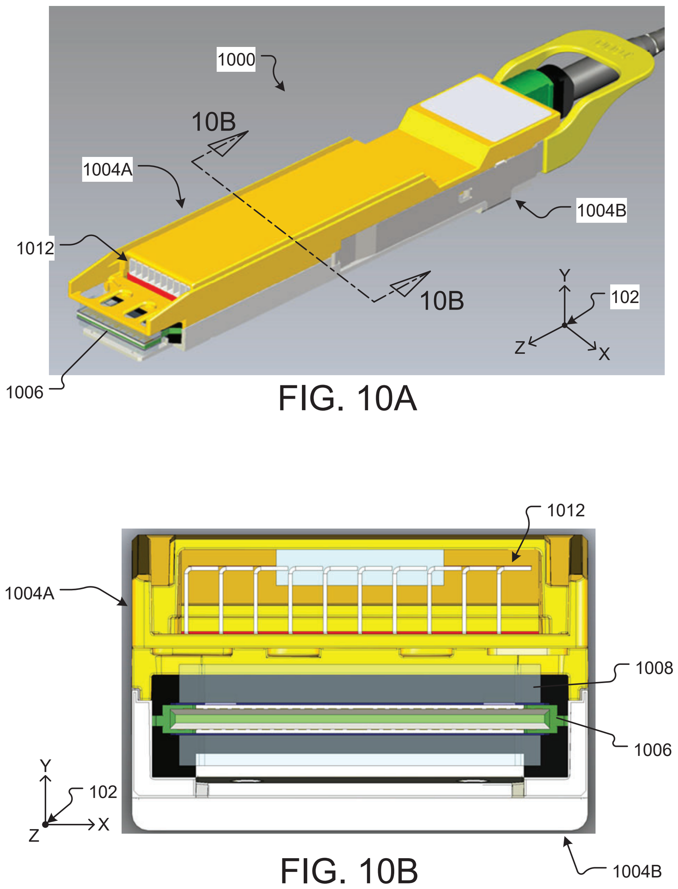

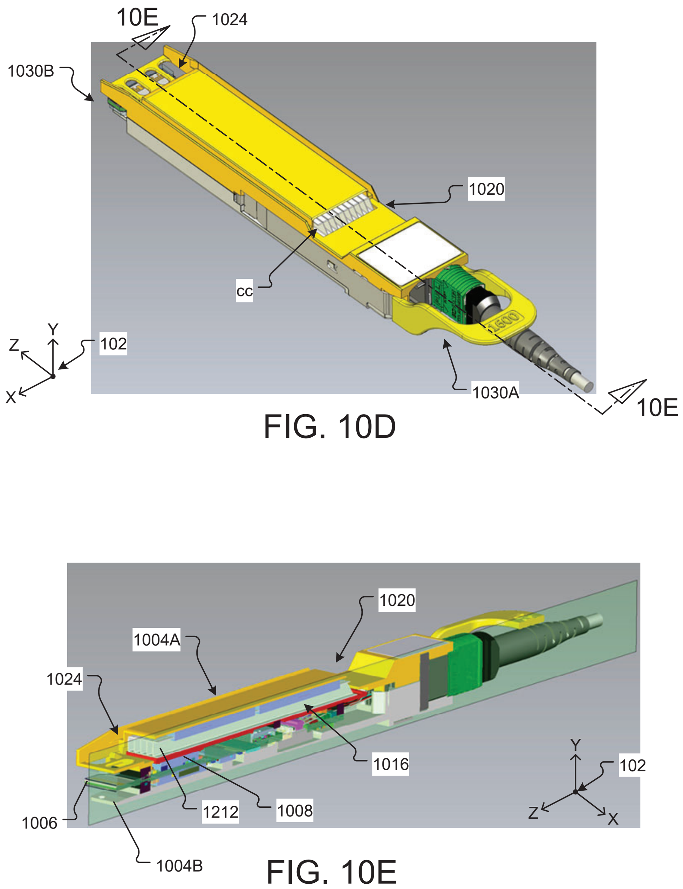

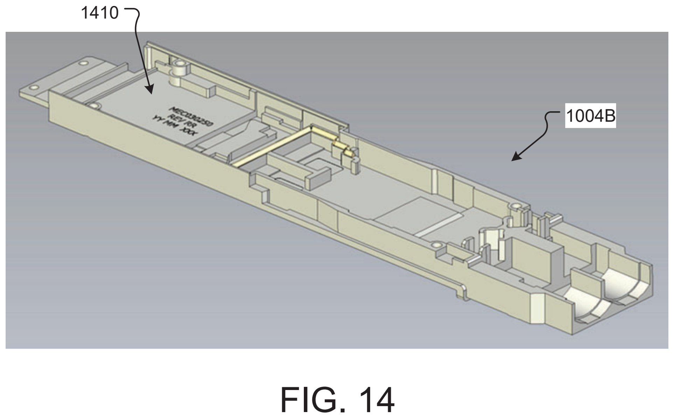

With reference now to Figs. 10A through 14, another example of a pluggable network interface device 1000 will be described in accordance with at least some embodiments of the present disclosure. The pluggable network interface device 1000 may have one or more similar components as one or more other examples of the pluggable network interface device(s) 100, 500, 600, 700, 800, 900 depicted and described herein. In some embodiments, components of a pluggable network interface device 1000 may be provided in another example of a pluggable network interface device, such as pluggable network interface device(s) 100, 500, 600, 700, 800, 900. The opposite may also be true, meaning that components of a pluggable network interface device 100, 500, 600, 700, 800, 900 may be incorporated into a pluggable network interface device 1000 without departing from the scope of the present disclosure.

As can be seen in Figs. 10A - 10E, a pluggable network interface device 1000 may include a first shell portion 1004A and a second shell portion 1004B. The first shell portion 1004A may also be referred to as a top shell portion while the second shell portion 1004B may also be referred to as a bottom shell portion. The first shell portion 1004A and second shell portion 1004B may mate together to seal one or more electrical components therein. The first shell portion 1004A and second shell portion 1004B may also form a housing, similar to housing 104. Accordingly, one or more seals may also be provided between the first shell portion 1004A and second shell portion 1004B to help protect components (e.g., electrical components) maintained within the housing.

As an example, a circuit substrate 1006 may be maintained between the first shell portion 1004A and second shell portion 1004B. The circuit substrate 1006 may be similar or identical to circuit substrate 106. There may be one or more processing components mounted on the circuit substrate 1006. Illustratively and without limitation, one or more heat generating circuit packages 1008 may be provided on the circuit substrate 1006. The heat generating circuit package(s) 1008 may include one or more passive circuit element and/or one or more active circuit elements. As an example, the heat generating circuit package(s) 1008 may include resistor(s), inductor(s), capacitor(s), transistor(s), diode(s), integrated circuit(s), power source(s), power converter(s), and the like.

The pluggable network interface device 1000 may also include a heatsink 1012 that is configured to transfer heat away from the heat generating circuit package(s) 1008. The heatsink 1012 may be provided between the circuit substrate 1006 and the first shell portion 1004A. In some embodiments, the heatsink 1012 may also create an airflow path 1016 that allows air to flow between a first opening 1020 and a second opening 1024 of the first shell portion 1004A. Air may be allowed to flow in either direction through the airflow path 1016. For instance, air may flow from the first opening 1020 to the second opening 1024. Alternatively, air may flow from the second opening 1024 to the first opening 1020. In this way, a direction of air flow in the airflow path 1016 may occur in either direction. In other words, air may flow across components of the network interface device 1000 from the first end 1030A of the pluggable network interface device 1000 toward the second end 1030B or from the second end 1030B toward the first end 1030A.

Among other things, the airflow path 1016 provides enhanced conduction cooling and heat transfer along the length of the pluggable network interface device 1000, while still allowing conduction cooling between the cover 1304 of the first shell portion 1004A, which is in contact with the heatsink 1012 via one or more strips of a TIM 1104. In contrast to heatsink arrangements that include a plurality of exposed fins, the cover 1304 of the first shell portion 1004A provides a large flat surface area to arrange in contact with a cooling element. In this arrangement, the pluggable network interface device 1000 may take advantage of convection cooling (e.g., by way of finned structures 1212 of the heatsink 1012) and conduction cooling by the large flat uppermost surface cover 1304. In this way, the pluggable network interface device 1000 may realize two modes of thermal management thereby improving its overall thermal performance.

The heatsink 1012 may be constructed with one or more finned structures 1212 mounted on a heatsink base 1204. The finned structure(s) 1212 may be glued, welded, bonded, and/or manufactured as an integral part of the heatsink base 1204. An inner surface 1216 of the heatsink base 1204 may directly contact the one or more strips of the TIM 1104, thereby facilitating a transfer of heat from the TIM(s) 1104 toward the finned structure(s) 1212.

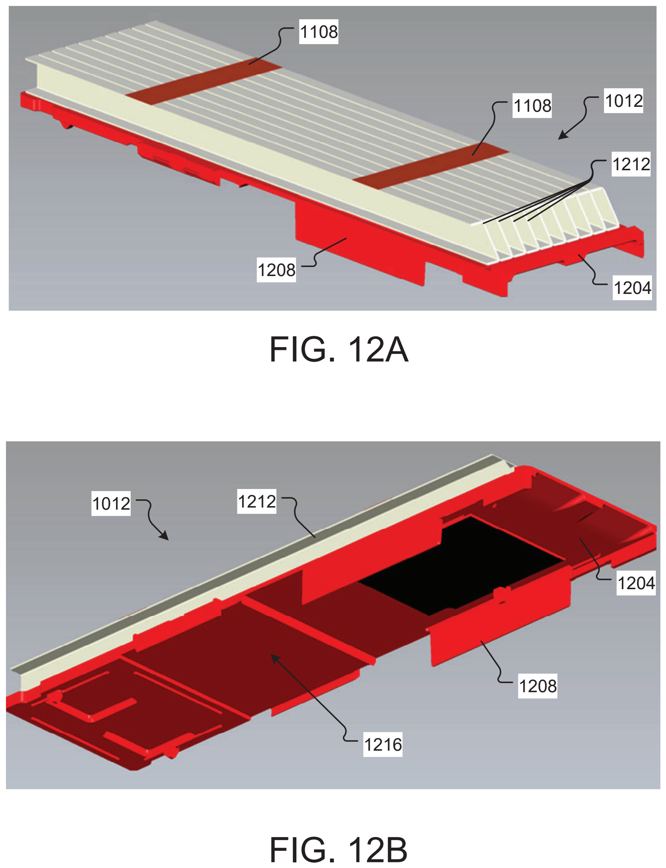

As noted above, the finned structure(s) 1212 may be configured to help support heat dissipation (e.g., thermal transfer) from the heat generating circuit package(s) 1008. The heatsink base 1204 may also help to maintain a structural integrity of the finned structure(s) 1212 as well as maintain a desired height of the heatsink 1012 within a receiving cavity 1410 of the second shell portion 1004B. More specifically, as can be seen in Figs. 12A and 12B, the heatsink base 1204 may include one or more standoffs 1208 that are configured to rest on an inner surface of the second shell portion 1004B and/or a surface of the circuit substrate 1006.

In some embodiments, the heatsink 1012 may include a plurality of finned structures 1212 having a substantially c-shaped or u-shaped configuration that enhances a total surface area of the heatsink 1012 and that helps to maintain the airflow path 1016 underneath a cover 1304 of the first shell portion 1004A. The finned structures 1212 of the heatsink 1012 may extend between the first opening 1020 and the second opening 1024 as part of creating the airflow path 1016. The finned structures 1212 may be constructed of any suitable material for transferring heat (e.g., a thermally-conductive material). Examples of materials that may be used for the finned structures 1212 include, without limitation, metals (e.g., silver, gold, copper, aluminum, tungsten, zinc, etc.), metal alloys (e.g., aluminum nitride), ceramics, silicon carbide, graphite, diamonds, etc. Similar materials may be used for other components of the heatsink 1012.

For instance, the heatsink 1012 is also shown to include one or more strips of foil 1108 and one or more sections of a TIM 1104. In some embodiments, the strip(s) of foil 1108 may help to hold the finned structures 1212 in a desired arrangement. The strip(s) of foil 1108 may be constructed from a thermally-conductive material, such as those discussed in connection with the finned structure(s) 1212. In some embodiments, the strip(s) of foil 1108 may help to secure a TIM 1104 to the finned structures 1212.

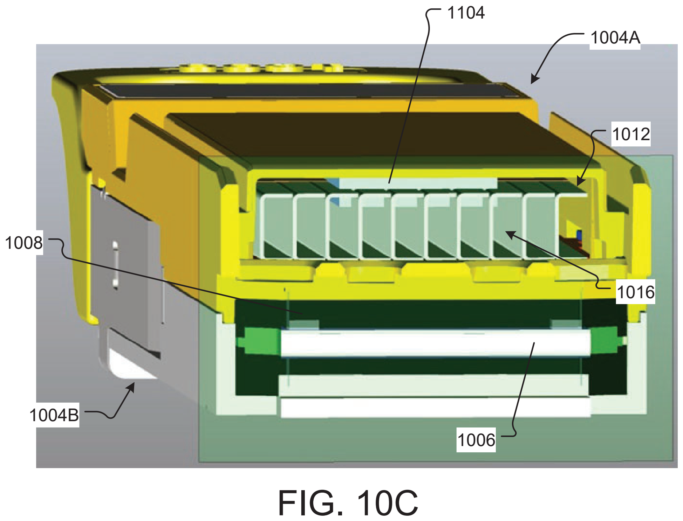

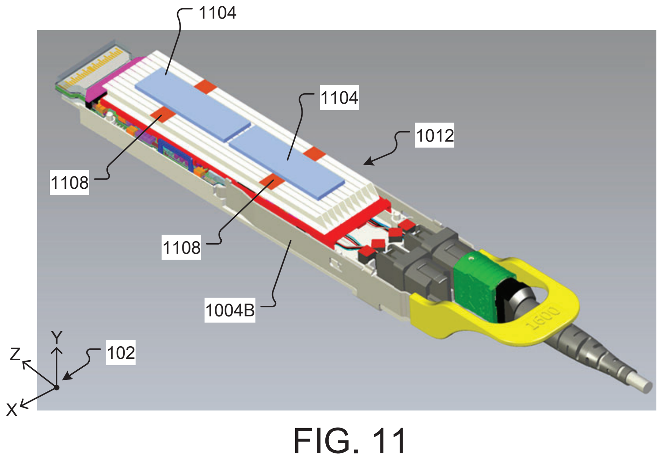

As can be seen in Fig. 11, each strip of foil 1108 in a plurality of strips of foil may secure a single section of a TIM 1104. As can be seen in Figs. 10B and 10C, the height (e.g., a distance between a top surface of the first shell portion 1004A and a bottom surface of the second shell portion 1004B) of the pluggable network interface device 1000 may be reliably maintained based on tolerances set for the individual components of the pluggable network interface device 1000 during manufacture thereof. In other words, the tolerance stack of the heatsink 1012, heat generating circuit package(s) 1008, and TIM 1104 can vary because these interior components are maintained between the first shell portion 1004A and the second shell portion 1004B. As such, any variations in tolerances of the interior components do not have an impact on the height of the pluggable network interface device 1000. At least one benefit to this arrangement includes the ability to repeatedly and reliable engage and disengage the pluggable network interface device 1000 with a corresponding receptacle. Such engagement and disengagement can be achieved without any significant force or exerted pressure on the heat generating circuit package(s) 1008, which could otherwise be susceptible to damage under such conditions, especially over time.

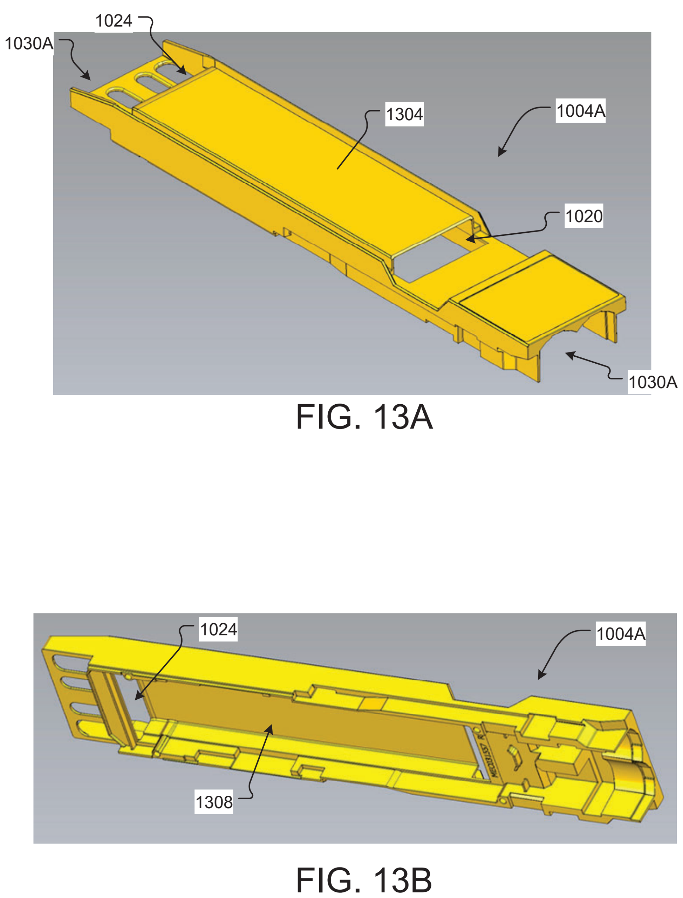

As shown in Figs. 10B, 10C, and 10E, the heatsink 1012 may be arranged in direct contact with the heat generating circuit package(s) 1008. The heatsink 1012, however, may be protected from external forces (e.g., from forces outside of the housing), potential damage, or stress, by the first shell portion 1004A. More specifically, as shown in Figs. 13A and 13B, the first shell portion 1004A may include a cover 1304 that extends over at least a substantial portion (e.g., more than half) of the heatsink 1012. The cover 1304 of the first shell portion 1004A may protect the heat generating circuit package(s) 1008 and/or the circuit substrate 1006 from external forces (e.g., from outside of the package), potential damage, or stress. In some embodiments, the first shell portion 1004A may include a contact surface 1308 that faces toward the heat generating circuit package(s) 1008.

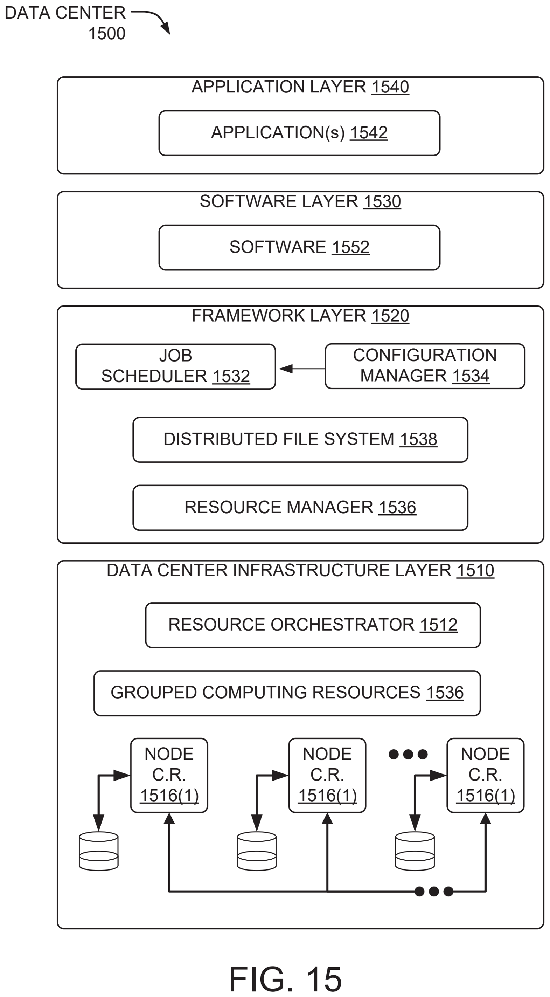

Fig. 15 illustrates additional components of an example data center 1500 according to at least some embodiments of the present disclosure. The data center 1500 may also include one or more modules subject to one or more cooling/thermal management features as described herein.

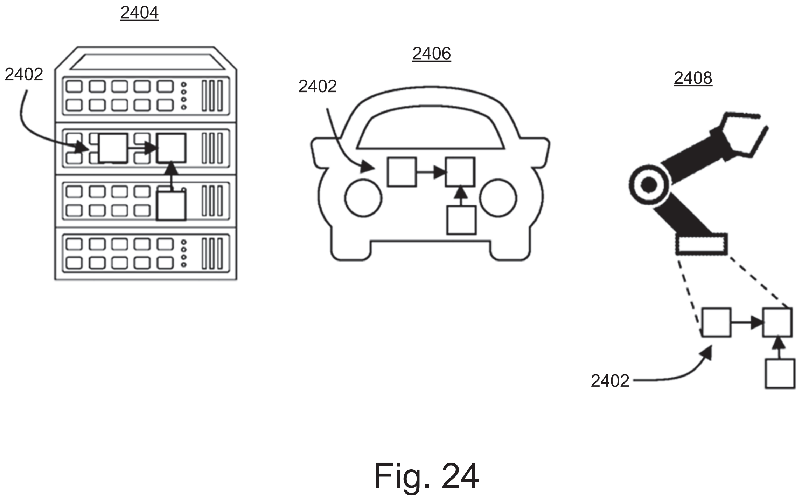

In at least one embodiment, data center 1500 includes a data center infrastructure layer 1510, a framework layer 1520, a software layer 1530, and an application layer 1530. In at least one embodiment, the infrastructure layer 1510, the framework layer 1520, the software layer 1530, and the application layer 1540 may be partly or fully provided via computing components on server trays located in racks of a data center, such as data center 2404 depicted and described in Fig. 24. This enables cooling systems of the present disclosure to direct cooling to certain ones of the computing features and the interconnect features, in an efficient and effective manner. Further, aspects of the data center 1500, including the data center infrastructure layer 1510, the framework layer 1520, the software layer 1530, and the application layer 1540 may be used to support selection or design of the intermediate layers. As such, the discussion in reference to Fig. 15 may be understood to apply to the hardware and software features required to enable or support cooling functionality, for instance.

In at least one embodiment, as in Fig. 15, data center infrastructure layer 1510 may include a resource orchestrator 1512, grouped computing resources 1536, and node computing resources ("node C.R.s") 1516(1)-1516(N), where "N" represents any whole, positive integer. In at least one embodiment, node C.R.s 1516(1)-1516(N) may include, but are not limited to, any number of central processing units ("CPUs") or other processors (including accelerators, field programmable gate arrays (FPGAs), graphics processors, etc.), memory devices (such as dynamic read-only memory), storage devices (such as solid state or disk drives), network input/output ("NW I/O") devices, network switches, virtual machines ("VMs"), power modules, and cooling modules, etc. In at least one embodiment, one or more node C.R.s from among node C.R.s 1516(1)-1516(N) may be a server having one or more of above-mentioned computing resources.

In at least one embodiment, grouped computing resources 1536 may include separate groupings of node C.R.s housed within one or more racks (not shown), or many racks housed in data centers at various geographical locations (also not shown). Separate groupings of node C.R.s within grouped computing resources 1536 may include grouped compute, network, memory or storage resources that may be configured or allocated to support one or more workloads. In at least one embodiment, several node C.R.s including CPUs or processors may grouped within one or more racks to provide compute resources to support one or more workloads. In at least one embodiment, one or more racks may also include any number of power modules, cooling modules, and network switches, in any combination.

In at least one embodiment, resource orchestrator 1512 may configure or otherwise control one or more node C.R.s 1516(1)-1516(N) and/or grouped computing resources 1536. In at least one embodiment, resource orchestrator 1512 may include a software design infrastructure ("SDI") management entity for data center 1500. In at least one embodiment, resource orchestrator may include hardware, software or some combination thereof.

In at least one embodiment, as shown in Fig. 15, framework layer 1520 includes a job scheduler 1532, a configuration manager 1534, a resource manager 1536 and a distributed file system 1538. In at least one embodiment, framework layer 1520 may include a framework to support software 1552 of software layer 1530 and/or one or more application(s) 1542 of application layer 1540. In at least one embodiment, software 1552 or application(s) 1542 may respectively include web-based service software or applications, such as those provided by Amazon Web Services, Google Cloud and Microsoft Azure. In at least one embodiment, framework layer 1520 may be, but is not limited to, a type of free and open-source software web application framework such as Apache Spark^{™} (hereinafter "Spark") that may utilize distributed file system 1538 for large-scale data processing (such as "big data"). In at least one embodiment, job scheduler 1532 may include a Spark driver to facilitate scheduling of workloads supported by various layers of data center 1500. In at least one embodiment, configuration manager 1534 may be capable of configuring different layers such as software layer 1530 and framework layer 1520 including Spark and distributed file system 1538 for supporting large-scale data processing. In at least one embodiment, resource manager 1536 may be capable of managing clustered or grouped computing resources mapped to or allocated for support of distributed file system 1538 and job scheduler 1532. In at least one embodiment, clustered or grouped computing resources may include grouped computing resource 1536 at data center infrastructure layer 1510. In at least one embodiment, resource manager 1536 may coordinate with resource orchestrator 1512 to manage these mapped or allocated computing resources.

In at least one embodiment, software 1552 included in software layer 1530 may include software used by at least portions of node C.R.s 1516(1)-1516(N), grouped computing resources 1536, and/or distributed file system 1538 of framework layer 1520. One or more types of software may include, but are not limited to, Internet web page search software, e-mail virus scan software, database software, and streaming video content software.

In at least one embodiment, application(s) 1542 included in application layer 1540 may include one or more types of applications used by at least portions of node C.R.s 1516(1)-1516(N), grouped computing resources 1536, and/or distributed file system 1538 of framework layer 1520. One or more types of applications may include, but are not limited to, any number of a genomics application, a cognitive compute, and a machine learning application, including training or inferencing software, machine learning framework software (such as PyTorch, TensorFlow, Caffe, etc.) or other machine learning applications used in conjunction with one or more embodiments.

In at least one embodiment, any of configuration manager 1534, resource manager 1536, and resource orchestrator 1512 may implement any number and type of self-modifying actions based on any amount and type of data acquired in any technically feasible fashion. In at least one embodiment, self-modifying actions may relieve a data center operator of data center 1500 from making possibly bad configuration decisions and possibly avoiding underutilized and/or poor performing portions of a data center.

In at least one embodiment, data center 1500 may include tools, services, software or other resources to train one or more machine learning models or predict or infer information using one or more machine learning models according to one or more embodiments described herein. In at least one embodiment, in at least one embodiment, a machine learning model may be trained by calculating weight parameters according to a neural network architecture using software and computing resources described above with respect to data center 1500. In at least one embodiment, trained machine learning models corresponding to one or more neural networks may be used to infer or predict information using resources described above with respect to data center 1500 by using weight parameters calculated through one or more training techniques. Deep learning may be advanced using any appropriate learning network and the computing capabilities of the data center 1500. As such, a deep neural network (DNN), a recurrent neural network (RNN) or a convolutional neural network (CNN) may be supported either simultaneously or concurrently using the hardware in the data center. Once a network is trained and successfully evaluated to recognize data within a subset or a slice, for instance, the trained network can provide similar representative data for using with the collected data.

In at least one embodiment, data center 1500 may use CPUs, application-specific integrated circuits (ASICs), GPUs, FPGAs, or other hardware to perform training and/or inferencing using above-described resources. Moreover, one or more software and/or hardware resources described above may be configured as a service to allow users to train or performing inferencing of information, such as pressure, flow rates, temperature, and location information, or other artificial intelligence services.

Inference and/or training logic may be used to perform inferencing and/or training operations associated with one or more embodiments. In at least one embodiment, inference and/or training logic may be used in system Fig. 15 for inferencing or predicting operations based, at least in part, on weight parameters calculated using neural network training operations, neural network functions and/or architectures, or neural network use cases described herein. In at least one embodiment, inference and/or training logic may include, without limitation, hardware logic in which computational resources are dedicated or otherwise exclusively used in conjunction with weight values or other information corresponding to one or more layers of neurons within a neural network. In at least one embodiment, inference and/or training logic may be used in conjunction with an application-specific integrated circuit (ASIC), such as Tensorflow^{®} Processing Unit from Google, an inference processing unit (IPU) from Graphcore^{™}, or a Nervana^{®} (such as "Lake Crest") processor from Intel Corp.

In at least one embodiment, inference and/or training logic may be used in conjunction with central processing unit (CPU) hardware, graphics processing unit (GPU) hardware or other hardware, such as field programmable gate arrays (FPGAs). In at least one embodiment, inference and/or training logic includes, without limitation, code and/or data storage modules which may be used to store code (such as graph code), weight values and/or other information, including bias values, gradient information, momentum values, and/or other parameter or hyperparameter information. In at least one embodiment, each of the code and/or data storage modules is associated with a dedicated computational resource. In at least one embodiment, the dedicated computational resource includes computational hardware that further include one or more ALUs that perform mathematical functions, such as linear algebraic functions, only on information stored in code and/or data storage modules, and results from which are stored in an activation storage module of the inference and/or training logic.

Various network topologies may be deployed within the data center 1500. For instance, and without limitation, the switches within each layer (e.g., edge layer, aggregation layer, core layer) may be 1U switches. The switches may be electrical switches, optical switches, hybrid electro-optical switches, or any combination thereof. The switches may be implemented with suitable hardware and/or software that enables the routing of signals in the appropriate domain. For example, an electrical switch may include receivers that receive and convert optical signals into electrical signals for routing within the electrical switch. A receiver of an electrical switch may include a transimpedance amplifier (TIA), a photodetector, and a controller which all serve to convert the optical signals into electrical signals. Each electrical switch may further include transmitters that convert electrical signals routed within the electrical switch into optical signals for output to another switch (optical or electrical) within the system. For example, a transmitter of an electrical switch may include a light source, a modulator, and a controller that controls the modulator and light source. In some embodiments, receiver/transmitter pairs may be integrated into a single transceiver. Each electrical switch may also include internal switching circuitry for routing electrical signals within the electrical switch.

The terms "electrical switch," "electrical switching ASIC," "ASIC," and variants thereof may used interchangeably. Although some figures illustrated herein show the electrical switches in the electrical blocks as being embodied by ASICs, example embodiments are not limited thereto, and the electrical switches may be implemented with any suitable hardware and/or software that enables routing of signals in the electrical domain. In addition, a set of optical switches at one or more levels of a hybrid optoelectrical switch may be referred to herein as an optical block while a set of electrical switches at one or more levels of a hybrid optoelectrical switch may be referred to as an electrical block.

For example, an electrical switch may include receivers that receive and convert optical signals into electrical signals for routing within the electrical switch. For example, a receiver of an electrical switch may include a transimpedance amplifier (TIA), a photodetector, and a controller which all serve to convert the optical signals into electrical signals. Each electrical switch may further include transmitters that convert electrical signals routed within the electrical switch into optical signals for output to another switch (optical or electrical) within the system. For example, a transmitter of an electrical switch may include a light source, a modulator, and a controller that controls the modulator and light source. In at least one example embodiment, receiver/transmitter pairs are integrated into a single transceiver. Each electrical switch may further include internal switching circuitry for routing electrical signals within the electrical switch.

Embodiments of the present disclosure are not just limited to electrical and/or optoelectronic switches. It should be appreciated that embodiments of the present disclosure may also be utilized in quantum switches or in data centers 1900 comprising one or more quantum switches.

Data security and privacy are among the top concerns in the data center environment. The financial cost of a security breach can be substantial, especially when customer data is exposed. Sensitive data has historically been protected by Internet Protocol (IP) segmentation and firewalls with intrusion prevention systems that were simple and faster than encryption. However, as workloads in the corporate data enter begin to migrate to the public cloud, the need to encrypt any data traversing the network becomes foundational. Hyperscale cloud service providers are increasingly enabling encryption across their massive Data Center Interconnect (DCI) networks to meet customer expectations.

To eliminate vulnerabilities in the public cloud infrastructure all segments of the cloud data center network need to be fortified with encryption, including the intra-data center segment which poses additional challenges due to the large number of connections and smaller margins.

Overall, the security of an encryption system is limited by its weakest link. In existing systems, the known weakest link is identified as the key exchange protocol like Diffie-Hellman and Rivest-Shamir-Adleman (RSA). These systems rely on the computational complexity of the associated algorithms; it is in principle possible to hack the system provided that extremely strong processing power is available. Current systems are designed in such a way that breaking the key exchange algorithm would take unrealistic time even if the state-of-the-art processing systems are used, thus making the encryption practically unhackable. However, the advent of quantum computers is expected to disrupt this methodology since the available processing power will scale exponentially.

A quantum computer capable of implementing Shor's algorithm could factor large integers exponentially faster than a classical computer, rendering common asymmetric public key encryption protocols such as RSA ineffective. Such a quantum computer can crack public encryption protocols much faster than a classical computer, rendering them unsecure. New "quantum secure" key exchange solutions are required, and ongoing research is investigating software and hardware approaches. On the software side, Post Quantum Cryptography (PQC) is focusing on algorithms that are quantum-resistant (e.g., encryption methods based on math that a quantum computer is not advantaged in computing). On the hardware side, Quantum Key Distribution (QKD) facilitates key exchange by exchanging photons which, by the principles of quantum physics, will be perturbed in a detectable way if an eavesdropper is present. Consensus is that for highest security a hybrid approach should be pursued, combining PQC with QKD.

A pervasive and future-proof solution for intra-data center security combining PQC and QKD faces several challenges, primarily related to the hardware nature and current implementation particularities of QKD.

QKD equipment is commercially available and is finding application in use cases where particular point-to-point links need to be secured, such as in inter-data center connections. The hardware essence of QKD requires changes to the overall network design and infrastructure. Typically, QKD equipment is added alongside existing network equipment to facilitate key exchange in select connections which are considered non-trusted. For example, in the DCI use case, each individual data center network is considered a trusted zone and only the connections between data centers are enhanced by QKD. Hence, only the DCI-facing ports of the relevant network infrastructure are combined with the QKD equipment and are encrypted using QKD keys. Current QKD equipment is considerably bulky (e.g., a rack mountable form factor with several rack units of height); however, as only a few units are needed, integration is feasible without significant implications to the data center operator. However, when migrating to an intra-data center installation following the zero-trust concept where all links have to be secured, the number of QKD connections rises dramatically. The current form factor of QKD equipment inhibits realistic deployment inside the data center as it would consume the majority of each rack's volume and would degrade computational density. It is expected that new technologies (such as photonic integrated circuits) will enable the future miniaturization of QKD equipment.

A switch, whether electric, optoelectronic, and/or quantum, may include input circuit(s) and output circuit(s), linked by switching core. In some embodiments, a switch may include multiple inputs and outputs.

A number of architectures of this type have been proposed, including "Next Generation I/O" (NGIO) and "Future I/O" (FIO), culminating in the "InfiniBand" architecture, which has been advanced by a consortium led by a group of industry leaders (including Intel, Sun, Hewlett Packard, IBM, Compaq, Dell and Microsoft). Storage Area Networks (SAN) provide a similar, packetized, serial approach to high-speed storage access, which can also be implemented using an InfiniBand fabric.

Communications between a parallel bus and a packet network generally require a communications interface, to convert bus cycles into appropriate packets and vice versa. For example, a host channel adapter or target channel adapter can be used to link a parallel bus, such as the PCI bus, to the InfiniBand fabric. When the adapter receives data from a device on the PCI bus, it inserts the data in the payload of an InfiniBand packet, and then adds an appropriate header and error checking code, such as a cyclic redundancy check (CRC) code, as required for network transmission. The InfiniBand packet header includes a routing header and a transport header. The routing header contains information at the data link protocol level, including fields required for routing the packet within and between fabric subnets. The transport header contains higher-level, end-to-end transport protocol information. Similar headers are used in other types of packet networks known in the art, such as Internet Protocol (IP) networks.

In at least one embodiment, aspects of the present disclosure may be used in other devices such as handheld devices and embedded applications. Some examples of handheld devices include cellular phones, Internet Protocol devices, digital cameras, personal digital assistants ("PDAs"), and handheld PCs. In at least one embodiment, embedded applications may include a microcontroller, a digital signal processor (DSP), an SoC, network computers ("NetPCs"), set-top boxes, network hubs, wide area network ("WAN") switches, or any other system that may perform one or more instructions. In an embodiment, a computer system having one or more aspects of the present disclosure may be used in devices such as graphics processing units (GPUs), network adapters, central processing units, and network devices such as switches (e.g., a high-speed direct GPU-to-GPU interconnect such as the NVIDIA GH100 NVLINK or the NVIDIA Quantum 2 64 Ports InfiniBand NDR Switch).

The following figures set forth, without limitation, example computer-based systems that can be used to implement at least one embodiment.

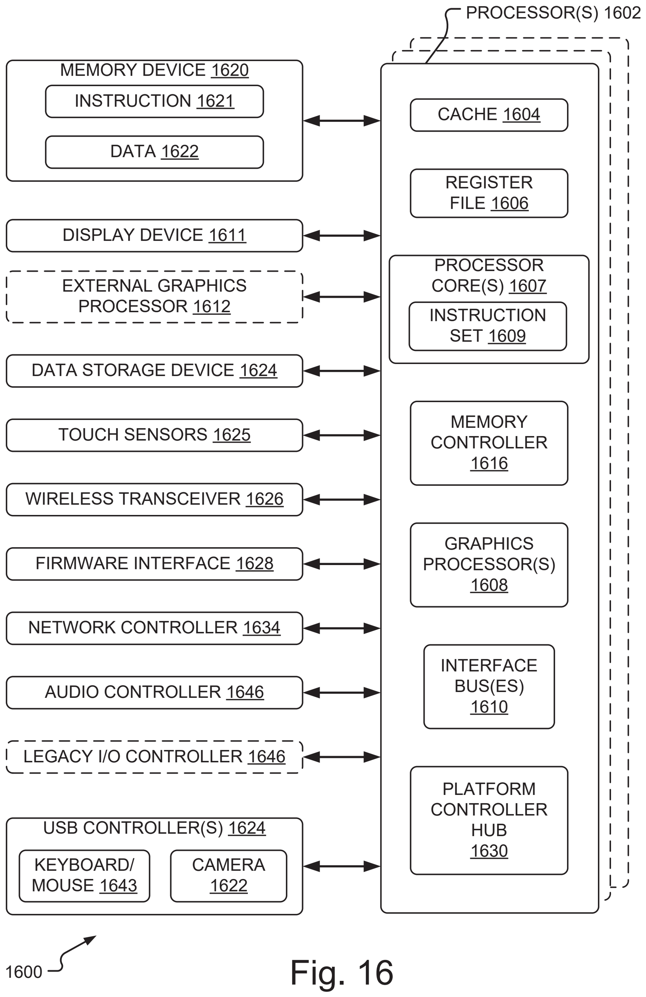

Fig. 16 illustrates a processing system 1600 that may benefit from or include one or more cooling components as depicted and described herein. In at least one embodiment, processing system 1600 includes one or more processors 1602 and one or more graphics processors 1608, and may be a single processor desktop system, a multiprocessor workstation system, or a server system having a large number of processors 1602 or processor cores 1607. In at least one embodiment, processing system 1600 is a processing platform incorporated within a system-on-a-chip ("Sort") integrated circuit for use in mobile, handheld, or embedded devices.

In at least one embodiment, processing system 1600 can include, or be incorporated within a server-based gaming platform, a game console, a media console, a mobile gaming console, a handheld game console, or an online game console. In at least one embodiment, processing system 1600 is a mobile phone, smart phone, tablet computing device or mobile Internet device. In at least one embodiment, processing system 1600 can also include, couple with, or be integrated within a wearable device, such as a smart watch wearable device, eyewear device, augmented reality device, or virtual reality device. In at least one embodiment, processing system 1600 is a television or set top box device having one or more processors 1602 and a graphical interface generated by one or more graphics processors 1608.

In at least one embodiment, one or more processors 1602 each including one or more processor cores 1607 to process instructions which, when executed, perform operations for system and user software. In at least one embodiment, each of one or more processor cores 1607 is configured to process a specific instruction set 1609. In at least one embodiment, instruction set 1609 may facilitate Complex Instruction Set Computing ("CISC"), Reduced Instruction Set Computing ("RISC"), or computing via a Very Long Instruction Word ("VLIW"). In at least one embodiment, processor cores 1607 may each process a different instruction set 1609, which may include instructions to facilitate emulation of other instruction sets. In at least one embodiment, processor core 1607 may also include other processing devices, such as a digital signal processor ("DSP").

In at least one embodiment, processor 1602 includes cache memory ('cache") 1604. In at least one embodiment, processor 1602 can have a single internal cache or multiple levels of internal cache. In at least one embodiment, cache memory is shared among various components of processor 1602. In at least one embodiment, processor 1602 also uses an external cache (e.g., a Level 3 ("L3") cache or Last Level Cache ("LLC")) (not shown), which may be shared among processor cores 1607 using known cache coherency techniques. In at least one embodiment, register file 1606 is additionally included in processor 1602 which may include different types of registers for storing different types of data (e.g., integer registers, floating point registers, status registers, and an instruction pointer register). In at least one embodiment, register file 1606 may include general-purpose registers or other registers.

In at least one embodiment, one or more processor(s) 1602 are coupled with one or more interface bus(es) 1610 to transmit communication signals such as address, data, or control signals between processor 1602 and other components in processing system 1600. In at least one embodiment interface bus 1610, in one embodiment, can be a processor bus, such as a version of a Direct Media Interface ("DMI") bus. In at least one embodiment, interface bus 1610 is not limited to a DMI bus and may include one or more Peripheral Component Interconnect buses (e.g., "PCI," PCI Express ("PCIe")), memory buses, or other types of interface buses. In at least one embodiment processor(s) 1602 include an integrated memory controller 1616 and a platform controller hub 1630. In at least one embodiment, memory controller 1616 facilitates communication between a memory device and other components of processing system 1600, while platform controller hub ("PCH") 1630 provides connections to Input/Output ("I/O") devices via a local I/O bus. Connections between components of system 1600 may benefit from one or more cooling mechanisms depicted and described herein.

In at least one embodiment, memory device 1620 can be a dynamic random-access memory ("DRAM") device, a static random-access memory ("SRAM") device, flash memory device, phase-change memory device, or some other memory device having suitable performance to serve as processor memory. In at least one embodiment memory device 1620 can operate as system memory for processing system 1600, to store data 1622 and instructions 1621 for use when one or more processors 1602 executes an application or process. In at least one embodiment, memory controller 1616 also couples with an optional external graphics processor 1612, which may communicate with one or more graphics processors 1608 in processors 1602 to perform graphics and media operations. In at least one embodiment, a display device 1611 can connect to processor(s) 1602. In at least one embodiment display device 1611 can include one or more of an internal display device, as in a mobile electronic device or a laptop device or an external display device attached via a display interface (e.g., DisplayPort, etc.). In at least one embodiment, display device 1611 can include a head mounted display ("HMD") such as a stereoscopic display device for use in virtual reality ("VR") applications or augmented reality ("AR") applications.

In at least one embodiment, platform controller hub 1630 enables peripherals to connect to memory device 1620 and processor 1602 via a high-speed I/O bus. In at least one embodiment, I/O peripherals include, but are not limited to, an audio controller 1646, a network controller 1634, a firmware interface 1628, a wireless transceiver 1626, touch sensors 1625, a data storage device 1624 (e.g., hard disk drive, flash memory, etc.). In at least one embodiment, data storage device 1624 can connect via a storage interface (e.g., SATA) or via a peripheral bus, such as PCI, or PCIe. In at least one embodiment, touch sensors 1625 can include touch screen sensors, pressure sensors, or fingerprint sensors. In at least one embodiment, wireless transceiver 1626 can be a Wi-Fi transceiver, a Bluetooth transceiver, or a mobile network transceiver such as a 3G, 4G, or Long Term Evolution ("LTE") transceiver. In at least one embodiment, firmware interface 1628 enables communication with system firmware, and can be, for example, a unified extensible firmware interface ("UEFI"). In at least one embodiment, network controller 1634 can enable a network connection to a wired network. In at least one embodiment, a high-performance network controller (not shown) couples with interface bus 1610. In at least one embodiment, audio controller 1646 is a multi-channel high definition audio controller. In at least one embodiment, processing system 1600 includes an optional legacy I/O controller 1646 for coupling legacy (e.g., Personal System 2 ("PS/2")) devices to processing system 1600. In at least one embodiment, platform controller hub 1630 can also connect to one or more Universal Serial Bus ("USB") controllers 1625 connect input devices, such as keyboard and mouse 1643 combinations, a camera 1622, or other USB input devices.

In at least one embodiment, an instance of memory controller 1616 and platform controller hub 1630 may be integrated into a discreet external graphics processor, such as external graphics processor 1612. In at least one embodiment, platform controller hub 1630 and/or memory controller 1616 may be external to one or more processor(s) 1602. For example, in at least one embodiment, processing system 1600 can include an external memory controller 1616 and platform controller hub 1630, which may be configured as a memory controller hub and peripheral controller hub within a system chipset that is in communication with processor(s) 1602.

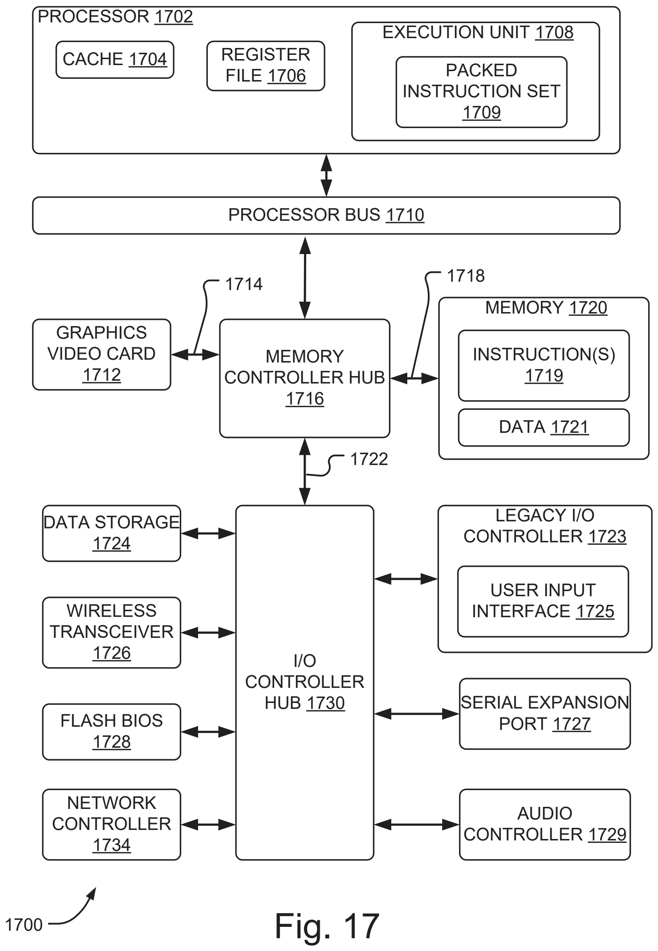

Fig. 17 illustrates a computer system 1700 that can include one or more cooling mechanisms depicted and described herein. In at least one embodiment, computer system 1700 may be a system with interconnected devices and components, an SOC, or some combination. Interconnections between such devices and components may include one or more optical transceiver modules, receptacles, and/or optical connectors. In at least one embodiment, computer system 1700 is formed with a processor 1702 that may include execution units to execute an instruction. In at least one embodiment, computer system 1700 may include, without limitation, a component, such as processor 1702 to employ execution units including logic to perform algorithms for processing data. In at least one embodiment, computer system 1700 may include processors, such as PENTIUM^{®} Processor family, Xeon^{™}, Itanium^{®}, XScale^{™} and/or StrongArm^{™}, Intel^{®} Core^{™}, or Intel^{®} Nervana^{™} microprocessors available from Intel Corporation of Santa Clara, California, although other systems (including PCs having other microprocessors, engineering workstations, set-top boxes and like) may also be used. In at least one embodiment, computer system 1700 may execute a version of WINDOWS' operating system available from Microsoft Corporation of Redmond, Wash., although other operating systems (UNIX and Linux for example), embedded software, and/or graphical user interfaces, may also be used.

In at least one embodiment, computer system 1700 may be used in other devices such as handheld devices and embedded applications. Some examples of handheld devices include cellular phones, Internet Protocol devices, digital cameras, personal digital assistants ("PDAs"), and handheld PCs. In at least one embodiment, embedded applications may include a microcontroller, a digital signal processor (DSP), an SoC, network computers ("Net PCs"), set-top boxes, network hubs, wide area network ("WAN") switches, or any other system that may perform one or more instructions.

In at least one embodiment, computer system 1700 may include, without limitation, processor 1702 that may include, without limitation, one or more execution units 1708 that may be configured to execute a Compute Unified Device Architecture ("CUDA") (CUDA^{®} is developed by NVIDIA Corporation of Santa Clara, CA) program. In at least one embodiment, a CUDA program is at least a portion of a software application written in a CUDA programming language. In at least one embodiment, computer system 1700 is a single processor desktop or server system. In at least one embodiment, computer system 1700 may be a multiprocessor system. In at least one embodiment, processor 1702 may include, without limitation, a CISC microprocessor, a RISC microprocessor, a VLIW microprocessor, a processor implementing a combination of instruction sets, or any other processor device, such as a digital signal processor, for example. In at least one embodiment, processor 1702 may be coupled to a processor bus 1710 that may transmit data signals between processor 1702 and other components in computer system 1700.

In at least one embodiment, processor 1702 may include, without limitation, a Level 1 ("L1") internal cache memory ("cache") 1704. In at least one embodiment, processor 1702 may have a single internal cache or multiple levels of internal cache. In at least one embodiment, cache memory may reside external to processor 1702. In at least one embodiment, processor 1702 may also include a combination of both internal and external caches. In at least one embodiment, a register file 1706 may store different types of data in various registers including, without limitation, integer registers, floating point registers, status registers, and instruction pointer register.

In at least one embodiment, execution unit 1708, including, without limitation, logic to perform integer and floating-point operations, also resides in processor 1702. Processor 1702 may also include a microcode ("ucode") read only memory ("ROM") that stores microcode for certain macro instructions. In at least one embodiment, execution unit 1708 may include logic to handle a packed instruction set 1709. In at least one embodiment, by including packed instruction set 1709 in an instruction set of a general-purpose processor 1702, along with associated circuitry to execute instructions, operations used by many multimedia applications may be performed using packed data in a general-purpose processor 1702. In at least one embodiment, many multimedia applications may be accelerated and executed more efficiently by using full width of a processor's data bus for performing operations on packed data, which may eliminate a need to transfer smaller units of data across a processor's data bus to perform one or more operations one data element at a time.

In at least one embodiment, execution unit 1708 may also be used in microcontrollers, embedded processors, graphics devices, DSPs, and other types of logic circuits. In at least one embodiment, computer system 1700 may include, without limitation, a memory 1720. In at least one embodiment, memory 1720 may be implemented as a DRAM device, an SRAM device, flash memory device, or other memory device. Memory 1720 may store instruction(s) 1719 and/or data 1721 represented by data signals that may be executed by processor 1702.

In at least one embodiment, a system logic chip may be coupled to processor bus 1710 and memory 1720. In at least one embodiment, the system logic chip may include, without limitation, a memory controller hub ("MCH") 1716, and processor 1702 may communicate with MCH 1716 via processor bus 1710. In at least one embodiment, MCH 1716 may provide a high bandwidth memory path 1718 to memory 1720 for instruction and data storage and for storage of graphics commands, data, and textures. In at least one embodiment, MCH 1716 may direct data signals between processor 1702, memory 1720, and other components in computer system 1700 and to bridge data signals between processor bus 1710, memory 1720, and a system I/O 1722. In at least one embodiment, system logic chip may provide a graphics port for coupling to a graphics controller. In at least one embodiment, MCH 1716 may be coupled to memory 1720 through high bandwidth memory path 1718 and graphics/video card 1712 may be coupled to MCH 1716 through an Accelerated Graphics Port ("AGP") interconnect 1714.

In at least one embodiment, computer system 1700 may use system I/O 1722 that is a proprietary hub interface bus to couple MCH 1716 to I/O controller hub ("ICH") 1730. In at least one embodiment, ICH 1730 may provide direct connections to some I/O devices via a local I/O bus. In at least one embodiment, local I/O bus may include, without limitation, a high-speed I/O bus for connecting peripherals to memory 1720, a chipset, and processor 1702. Examples may include, without limitation, an audio controller 1729, a firmware hub ("flash BIOS") 1728, a wireless transceiver 1726, a data storage 1724, a legacy I/O controller 1723 containing a user input interface 1725 and a keyboard interface, a serial expansion port 1727, such as a USB, and a network controller 1734. Data storage 1724 may comprise a hard disk drive, a floppy disk drive, a CD-ROM device, a flash memory device, or other mass storage device.

In at least one embodiment, Fig. 17 illustrates a system, which includes interconnected hardware devices or "chips." In at least one embodiment, Fig. 17 may illustrate an example SoC. In at least one embodiment, devices illustrated in Fig. 17 may be interconnected with proprietary interconnects, standardized interconnects (e.g., PCIe), or some combination thereof. In at least one embodiment, one or more components of system 1700 are interconnected using compute express link ("CXL") interconnects.

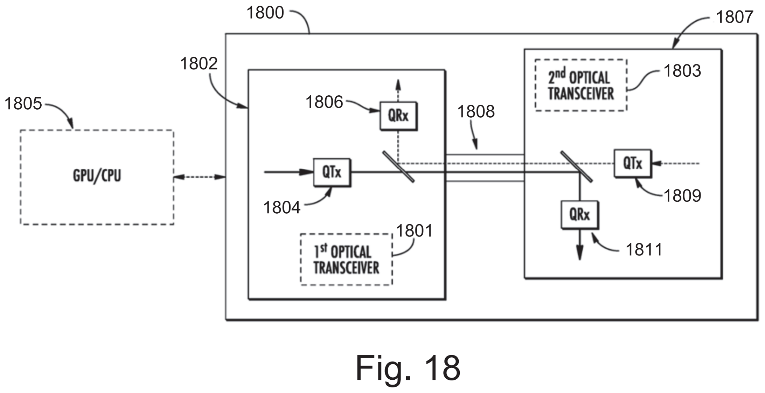

With reference to Fig. 18, an example bi-directional quantum interconnect 1800 (e.g., interconnect 1800) is illustrated. The interconnect 1800 may include one or more elements of system, such as an optical transceiver module, a receptacle, and/or an optical connector. As shown, the interconnect 1800 may include a first communication module 1802 and a second communication module 1807 communicably coupled by a first communication medium 1808. The first communication module 1802 may include a first quantum transmitter 1804 configured to generate quantum particles (e.g., qubit) for transmission. A photon refers to a fundamental unit of electromagnetic radiation and, in quantum communication systems, may serve as the object within which data is encoded. The quantum basis of the qubits refers to the way in which data is encoded and/or the quantum information is carried, by the first quantum transmitter 1804, where the data is the value of the encoded information. This encoding may be accomplished via sets of orthogonal quantum states, including, but not limited to, pairs of photonic polarization states, phase of single photons, time of arrival, optical frequency, quadratures, etc. The pairs of photonic polarization states may include, for example, the rectilinear, diagonal, and circular photonic polarization states. The rectilinear basis may refer to the pair of rectilinear photonic polarization states including the horizontal photon polarization state |0> and the vertical photon polarization state |1>. The diagonal basis may refer to the pair of diagonal and anti-diagonal photonic polarization states at 45 and 195 degrees, respectively. The circular basis may refer to the pair of circular photonic polarization states include the left circular photon polarization state IL) and the right circular photon polarization state |R>. The terms "state" or "states" may refer to a basic unit of quantum information comprising a two-level quantum mechanical system, such as the polarization of a single photon (e.g., a photon encoded using a quantum basis as described above).

Although described herein with reference to qubits transmitted via a quantum communication channel, the present disclosure contemplates that the techniques described herein may be applicable to quantum particles of any type. Furthermore, the basis (e.g., quantum state) of the qubit (s) transmitted by the first quantum transmitter 1804 may be only one such example of a first quantum characteristic of the qubits transmitted by the first quantum transmitter 1804. By way of a non-limiting example, the frequency, wavelength, and/or any other quantum characteristic, property, attribute, etc. of the qubits generated and transmitted by the first quantum transmitter 1804 may be varied based upon the intended application of the first communication module 1802. As described more fully hereinafter, the first quantum characteristics associated with the qubit (s) generated and transmitted by the first communication transmitter 1804 may be at least partially impacted by the quantum characteristics associated with other qubits transmitted within the same communication medium (e.g., quantum communication channel via an optical fiber or free space). Still further, the first quantum characteristics associated with the qubit(s) generated and transmitted by the first communication module 1802 may be, in some embodiments, at least partially impacted or controlled by the equipment capabilities associated with the first quantum transmitter 1804.

The first communication module 1802 may further include a first quantum receiver 1806 configured to receive (e.g., measure) qubits. As described hereafter, the first quantum receiver 1806 may be configured to measure qubits that are received, via the first communication medium 1808, from the second communication module 1807 (e.g., generated by a second quantum transmitter 1809). By way of continued example, the qubit serves as the object in quantum communication within which data is encoded, and the quantum basis of the qubit refers to a way in which data is encoded. As such, the first quantum receiver 1806 may be configured to measure qubits having second quantum characteristics, such as a quantum basis state used to encode data, the frequency of the qubits, the wavelength of the qubits, and/or the like. As described hereafter, at least one of the second quantum characteristics may be different from at least one of the first quantum characteristics so that qubits having the first quantum characteristics (e.g., transmitted by the first quantum transmitter 1804) and qubits having the second quantum characteristics (e.g., measured by the first quantum receiver 1806) may exist in the same first communication medium 1808. In other words, the second quantum characteristics, as defined by the second quantum transmitter 1809 described hereafter, may be such that bi-directional communication via the first communication medium 1808 may be achieved between the first communication module 1802 and the second communication module 1807. By way of a non-limiting example, time binning techniques, radio frequency (RF) modulation techniques, phase locking to shifted LOs (in the case of continuous variables), measurement using different basis, and/or any measurable physical attribute that may distinguish between an upstream channel and a downstream channel in the bi-directional communication implementations described herein may be used.

The second communication module 1807 may include a second quantum transmitter 1809 configured to generate qubits (e.g., photons or the like). The data of the qubits may be encoded via sets of orthogonal quantum states, including, but not limited to, pairs of photonic polarization states. The pairs of photonic polarization states may include, for example, the rectilinear, diagonal, and circular photonic polarization states as defined above. The second quantum characteristics associated with the qubit generated by the second quantum transmitter 1809 may include the basis of the qubit(s) transmitted by the second quantum transmitter 1809. Although described herein with reference to basis, the present disclosure contemplates that the second quantum characteristics may include the frequency, wavelength, and/or any other quantum characteristic, property, attribute, etc. of the qubits generated and transmitted by the second quantum transmitter 1809 and that the second quantum characteristics may be varied based upon the intended application of the second communication module 1807.

The second communication module 1807 may further include a second quantum receiver 1811 configured to receive (e.g., measure) qubits. Similar to the first quantum receiver 1806, the second quantum receiver 1811 may be configured to measure qubits that are received, via the first communication medium 1808, from the first communication module 1802 (e.g., generated by the first quantum transmitter 1804). The second quantum receiver 1811 may be configured to measure qubits having first quantum characteristics, such as the quantum basis used to encode data, the frequency of the qubits, the wavelength of the qubits, and/or the like.

The first communication medium 1808, as shown in Fig. 18, is further configured to communicably couple the first communication module 1802 and the second communication module 1807 such that communication is provided between the first quantum transmitter 1804 and the second quantum receiver 1811 and between the second quantum transmitter 1809 and the first quantum receiver 1806 via the first communication medium 1808. The first communication medium 1808 may refer to an optical line, fiber, a quantum line, and/or free space over which quantum data or information and particles, such as qubits, are exchanged. These would include quantum communication channels used for applying one or more quantum cryptographic techniques (e.g., QKD) that rely on quantum properties, such as quantum uncertainty, superposition, and/or quantum entanglement. Although the first communication medium 1808 is described herein with reference to a quantum communication channel, the present disclosure contemplates that the techniques described herein may be applicable to any communication channel. Furthermore, although described herein with reference to example embodiments in which the communication channel refers to an optical fiber or free space, the present disclosure contemplates that a communication channel may refer to any mechanism, structure (e.g., or absence thereof), or the like through which quantum information-based communications (e.g., photons, qubits, single or entangled quantum particles, etc.) may propagate or otherwise travel.

In some embodiments, the first communication medium 1808 may include an optical fiber such that communication between the first quantum transmitter 1804 and the second quantum receiver 1811 and communication between the second quantum transmitter 1809 and the first quantum receiver 1806 is provided by the same optical fiber. In other words, a common communication medium is used for bi-directional quantum communication between the first communication module 1802 and the second communication module 1807. In such an embodiment, a transmission of qubits between the first quantum transmitter 1804 and the second quantum receiver 1811 and a transmission of qubits between the second quantum transmitter 1809 and the first quantum receiver 1806 may occur at the same or substantially the same time. Although described herein with reference to an optical fiber implementation, the present disclosure contemplates that the bi-directional quantum communication techniques described herein may also be applicable to instances in which the first communication medium 1808 comprises a free space communication medium.

In an example bi-directional quantum communication operation, the first quantum transmitter 1804 may receive instructions (e.g., from the GPU/CPU 1805 and/or network card described hereafter) to generate and transmit qubits having first quantum characteristics (e.g., basis, frequency, wavelength, etc.). Similarly, the second quantum transmitter 1809 may receive instructions (e.g., from the same GPU/CPU 1805 or another computing device) to generate and transmit qubits having second quantum characteristics (e.g., basis, frequency, wavelength, etc.), one of which is different from the first quantum characteristics. The qubits may be transmitted from the first quantum transmitter 1804 and the second quantum transmitter 1809 to the second quantum receiver 1811 and the first quantum receiver 1806, respectively, via the same optical fiber (e.g., first communication medium 1808). The second quantum receiver 1811 may measure the qubits having the first quantum characteristics to receive the data encoded thereon. The first quantum receiver 1806 may similarly measure the qubits having the second quantum characteristics to receive the data encoded thereon. The present disclosure contemplates that the bi-directional quantum interconnect 1800 may leverage any computing device, GPU/CPU 1805, or the like communicably coupled thereto in order to, in whole or in part, control operation of the first communication module 1802 and the second communication module 1807. Furthermore, in some embodiments, the first quantum transmitter 1804 and/or the second quantum transmitter 1809 may each configured to generated entangled pairs of qubits.

With continued reference to Fig. 18, in some embodiments, the bi-directional quantum interconnect 1800 may employ classical communication channels, such as via optical transceivers. By way of a non-limiting example, the first communication module 1802 may include a first optical transceiver 1801 that is configured to generate optical signals (e.g., via a vertical cavity surface emitting laser (VCSEL) or the like) and receive optical signals (e.g., via a photodiode (PD) or the like). The second communication module 1807 may include a second optical transceiver 1803 that may similarly be configured to generate optical signals (e.g., via a vertical cavity surface emitting laser (VCSEL) or the like) and receive optical signals (e.g., via a photodiode (PD) or the like). These optical signals may also be transmitted via the first communication medium 1808 (e.g., an optical fiber or the like) and be used to, for example, facilitate synchronization between the first communication module 1802 and the second communication module 1807. Although described herein with reference to example synchronization operations, the present disclosure contemplates that a classical communication channel, such as the paired first optical transceiver 1801 and the second optical transceiver 1803, may be used for any operation (e.g., transmission of data between parties, sifting operations, etc.) based upon the intended application of the bi-directional quantum interconnect 1800.

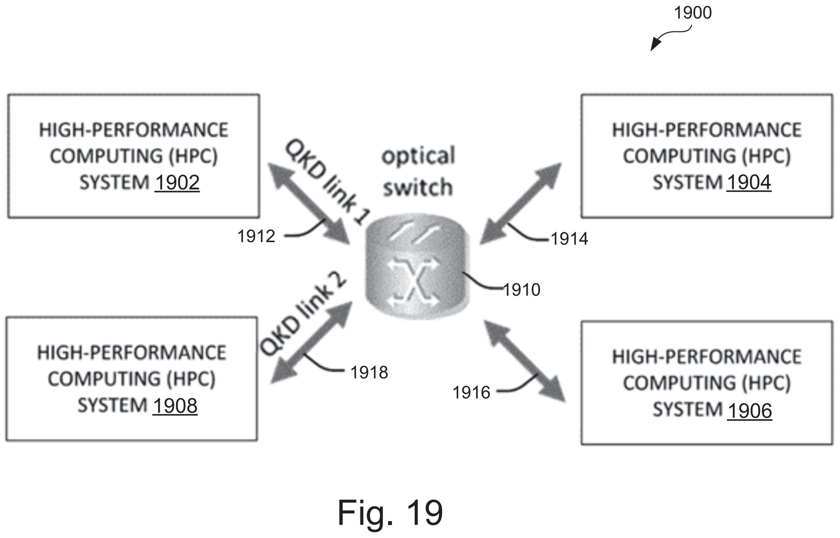

Fig. 19 illustrates a system 1900 that facilitates QKD connectivity between more than two HPC systems according to one or more embodiments of the present disclosure. The system 1900 may include one or more components of system to help improve thermal performance thereof. According to various embodiments, the system 1900 provides a crossbar optical switch to facilitate different connections among HPC systems. In an embodiment illustrated in Fig. 19, the system 1900 includes an HPC system 1902, an HPC system 1904, an HPC system 1906, and/or an HPC system 1908. The system 1900 also includes an optical switch 1910. The optical switch 1910 can be, for example, a crossbar optical switch that includes switches arranged in a matrix configuration to facilitate connections among the HPC system 1902, the HPC system 1904, the HPC system 1906 and/or the HPC system 1908. For example, the optical switch 1910 can include multiple input communication channels and multiple output communication channels that form a crossed pattern of interconnections to facilitate connections among the HPC system 1902, the HPC system 1904, the HPC system 1906, and/or the HPC system 1908.

The HPC system 1902 can be communicatively coupled to the HPC system 1904, the HPC system 1906, and/or the HPC system 1908 via the optical switch 1910. For example, the HPC system 1902 can be communicatively coupled to the optical switch 1910 via a QKD link 1912. Furthermore, the optical switch 1910 can be communicatively coupled to the HPC system 1904 via a QKD link 1914. As such, the HPC system 1902 can be communicatively coupled to the HPC system 1904 via the QKD link 1912, the optical switch 1910, and the QKD link 1914. In another example, the HPC system 1902 can be communicatively coupled to the optical switch 1910 via the QKD link 1912. Furthermore, the optical switch 1910 can be communicatively coupled to the HPC system 1906 via a QKD link 1916. As such, the HPC system 1902 additionally or alternatively can be communicatively coupled to the HPC system 1906 via the QKD link 1912, the optical switch 1910 and the QKD link 1916. In yet another example, the HPC system 1902 can be communicatively coupled to the optical switch 1910 via the QKD link 1912. Furthermore, the optical switch 1910 can be communicatively coupled to the HPC system 1908 via a QKD link 1918. As such, the HPC system 1902 additionally or alternatively can be communicatively coupled to the HPC system 1908 via the QKD link 1912, the optical switch 1910 and the QKD link 1918.

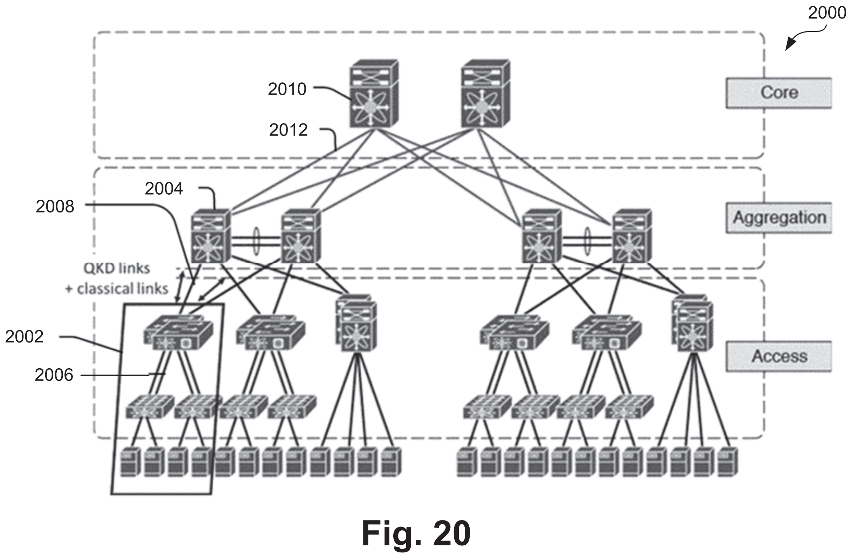

Fig. 20 illustrates a system 2000 that facilitates QKD communication via a fat-tree data center architecture according to one or more embodiments of the present disclosure. The system 2000 may include one or more thermal management components depicted and described herein. According to various embodiments, the system 2000 provides classical links within a computer cluster and QKD links external to the computer cluster. For instance, the system 2000 includes a computer cluster 2002. The computer cluster 2002 includes, for example, a set of connected computers (e.g., a set of connected processor cores, a set of connected servers, and/or a set of connected routers) associated with classical links 2006. Furthermore, the computer cluster 2002 is communicatively coupled to a server 2004 via a QKD link 2008. In certain embodiments, the computer cluster 2002 can be associated with an access layer of a data center network and the server 2004 can be associated with an aggregation layer of the data center network. In one or more embodiments, the server 2004 can be additionally communicatively coupled to a server 2010 via a classical link 2012. In certain embodiments, the server 2010 can be associated with a core layer of the data center network.

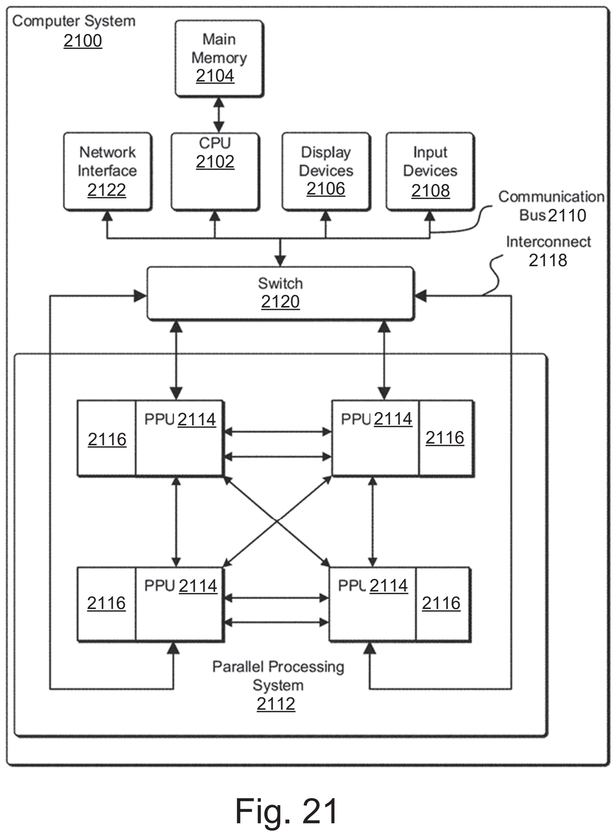

Fig. 21 illustrates a computer system 2100, according to at least one embodiment. In at least one embodiment, computer system 2100 is configured to implement various processes and methods described throughout this disclosure. In particular, the computer system 2100 may be provided with one or more components described herein to help improve the thermal performance thereof.

In at least one embodiment, computer system 2100 comprises, without limitation, at least one central processing unit ("CPU") 2102 that is connected to a communication bus 2110 implemented using any suitable protocol, such as PCI ("Peripheral Component Interconnect"), peripheral component interconnect express ("PCI-Express"), AGP ("Accelerated Graphics Port"), HyperTransport, or any other bus or point-to-point communication protocol(s). In at least one embodiment, computer system 2100 includes, without limitation, a main memory 2104 and control logic (e.g., implemented as hardware, software, or a combination thereof) and data are stored in main memory 2104 which may take form of random access memory ("RAM"). In at least one embodiment, a network interface subsystem ("network interface") 2122 provides an interface to other computing devices and networks for receiving data from and transmitting data to other systems from computer system 2100.

In at least one embodiment, computer system 2100, in at least one embodiment, includes, without limitation, input devices 2108, parallel processing system 2112, and display devices 2106 which can be implemented using a conventional cathode ray tube ("CRT"), liquid crystal display ("LCD"), light emitting diode ("LED"), plasma display, or other suitable display technologies. In at least one embodiment, user input is received from input devices 2108 such as keyboard, mouse, touchpad, microphone, and more. In at least one embodiment, each of foregoing modules can be situated on a single semiconductor platform to form a processing system.

In at least one embodiment, computer programs in form of machine-readable executable code or computer control logic algorithms are stored in main memory 2104 and/or secondary storage. Computer programs, if executed by one or more processors, enable system 2100 to perform various functions in accordance with at least one embodiment. memory 2104, storage, and/or any other storage are possible examples of computer-readable media. In at least one embodiment, secondary storage may refer to any suitable storage device or system such as a hard disk drive and/or a removable storage drive, representing a floppy disk drive, a magnetic tape drive, a compact disk drive, digital versatile disk ("DVD") drive, recording device, universal serial bus ("USB") flash memory, etc. In at least one embodiment, architecture and/or functionality of various previous figures are implemented in context of CPU 2102; parallel processing system 2112; an integrated circuit capable of at least a portion of capabilities of both CPU 2102; parallel processing system 2112; a chipset (e.g., a group of integrated circuits designed to work and sold as a unit for performing related functions, etc.); and any suitable combination of integrated circuit(s).

In at least one embodiment, parallel processing system 2112 includes, without limitation, a plurality of parallel processing units ("PPUs") 2114 and associated memories 2116. In at least one embodiment, PPUs 2114 are connected to a host processor or other peripheral devices via an interconnect 2118 and a switch 2120 or multiplexer. In at least one embodiment, parallel processing system 2112 distributes computational tasks across PPUs 2114 which can be parallelizable-for example, as part of distribution of computational tasks across multiple graphics processing unit ("GPU") thread blocks. In at least one embodiment, memory is shared and accessible (e.g., for read and/or write access) across some or all of PPUs 2114, although such shared memory may incur performance penalties relative to use of local memory and registers resident to a PPU 2114. In at least one embodiment, operation of PPUs 2114 is synchronized through use of a command such as_syncthreads( ), wherein all threads in a block (e.g., executed across multiple PPUs 2114) to reach a certain point of execution of code before proceeding.

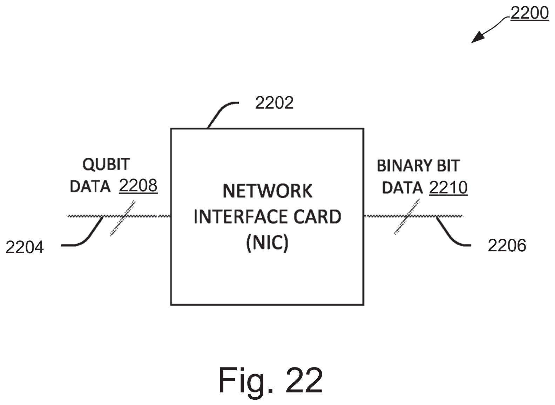

Fig. 22 illustrates a system 2200 according to one or more embodiments of the present disclosure. The system 2200 may include one or more thermal management components depicted and described herein to improve the thermal performance thereof. The system 2200 is illustrated to include a network interface controller (NIC) 2202. The NIC 2202 is, for example, a hardware component (e.g., a network interface controller) configured to connect to a network and/or to facilitate communications within the network. In certain embodiments, the NIC 2202 can be included in and/or can be coupled to a network interface module such as a transceiver device (e.g., an optical transceiver) that facilitates fiber optic communication. In one or more embodiments, the NIC 2202 can be configured to manage transmission of one or more optical signals via an optical fiber. Additionally or alternatively, in one or more embodiments, the NIC 2202 can be configured to control emission of one or more optical signals via a laser.

The NIC 2202, as depicted in Fig. 22, is coupled to a communication channel 2204 and a communication channel 2206. The communication channel 2204 may be a first communication channel associated with quantum communication (e.g., a QKD-based communication). The communication channel 2206 may be a second communication channel associated with classical network communication (e.g., non-QKD-based communication). In one or more embodiments, the communication channel 2206 is an optical communication channel (e.g., a transparent fiber optical connection) that transmits data (e.g., pulses of infrared light) encoded via qubits (e.g., a quantum communication data stream). In one or more embodiments, the communication channel 2206 is an optical communication channel (e.g., a transparent fiber optical connection) that transmits data (e.g., pulses of infrared light) encoded via bits (e.g., a binary data stream). Accordingly, the NIC 2202 can be configured to interface a QKD-based communication medium and a non-QKD-based communication medium. In an embodiment, the NIC 2202 is configured to receive qubit data 2208 via the communication channel 2204. The qubit data 2208 can include, for example, qubits associated with quantum information. Furthermore, in an embodiment, the NIC 2202 is configured to output binary bit data 2210 via the communication channel 2206. The binary bit data 2210 can include, for example, one or more classical binary bits associated with binary information. In one or more embodiments, the communication channel 2204 and/or the communication channel 2206 can be bi-directional. As such, in another embodiment, the NIC 2202 is configured to output the qubit data 2208 via the communication channel 2204. Furthermore, in another embodiment, the NIC 2202 is configured to receive the binary bit data 2210 via the communication channel 2206.

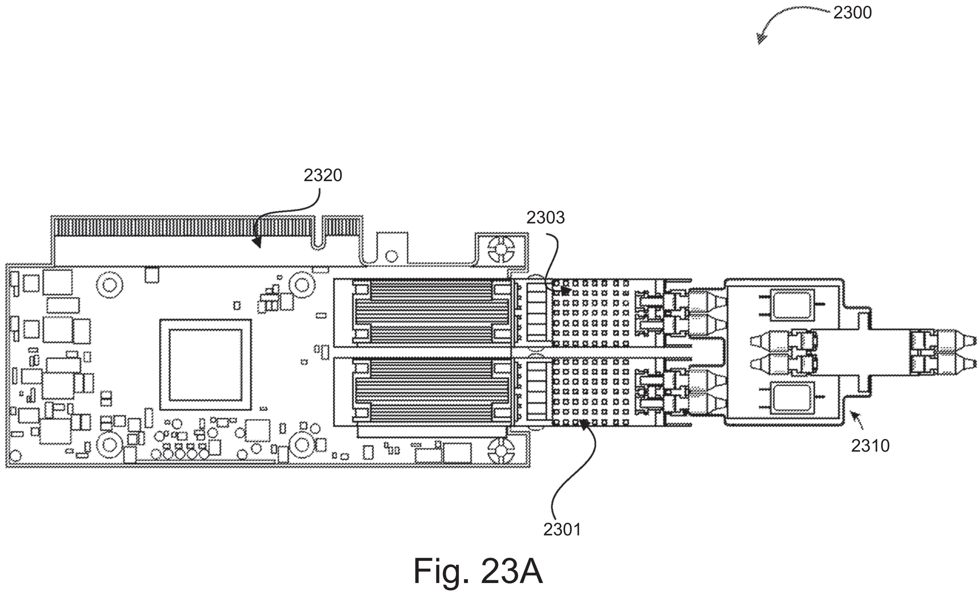

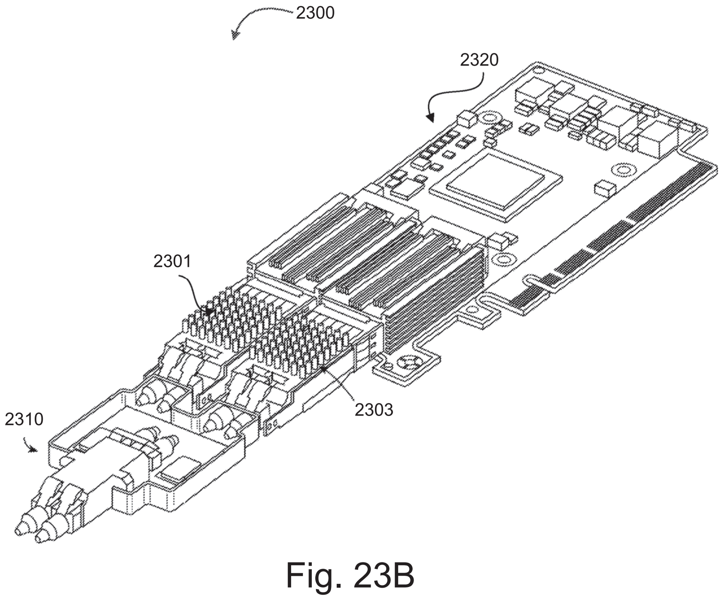

Figs. 23A and 23B illustrate a top view and a perspective view, respectively, of a transceiver module operatively coupled to a network adapter, in the present example a Network Interface Controller (NIC) 2300, in accordance with an embodiment of the disclosure. As shown in Figs. 23A and 23B, the transceiver module may correspond to an example of an optical transceiver module. The NIC 2300 is shown to include a first optical module 2308, a second optical module 2304, an adapter 2316, and a dual-port NIC 2312 of a server. Both the first optical module 2308 and the second optical module 2304 may be dual-fiber transceivers that are configured for duplex communication that allows the source (e.g., server) to communicate with the target (e.g., leaf switch) in both directions. The adapter 2316 may be a ganged physical component configured to link the first optical module 2308 and the second optical module 2304 for the purpose of transmitting and receiving data to and from the leaf switch.

In some embodiments, the adapter 2316 may be configured to operate in two configurations, such as a first configuration and a second configuration. In one aspect, the first configuration may be a default configuration of operation, where the first optical module 2308 may be operationally active. The second configuration may be a contingent configuration that is implemented when the first optical module 2308 operationally fails. When such a failure is detected, the second optical module 2304, which is otherwise operationally inactive or idle, may be engaged, become operationally active and handle all network traffic that was initially handled by the first optical module 2308.

In some embodiments, the transceiver module 2300 may be configured to operate in a leaf-spine architecture. A leaf-spine architecture is a data center network topology that may include two switching layers-a spine layer and a leaf layer. The leaf layer may include access switches (leaf switches) that aggregate traffic from servers and connect directly into the spine or network core. Spine switches interconnect all leaf switches in a full-mesh topology between access switches in the leaf layer and the servers from which the access switches aggregate traffic. As such, in one embodiment, to ensure reliable operation of downlinks, the transceiver module 2300 may be configured to operate between the server and the leaf layer. In particular, as shown in Figs. 23A and 23B, the adapter 2316 may be operatively coupled to the first optical module 2308 and the second optical module 2304, while the first optical module 2308 and the second optical module 2304 may be operatively coupled to a dual-port NIC 2312 of a server.

In embodiments, NIC 2300 may comprise one or more processing circuits, as detailed above; the processing circuits may comprise FW, that is loaded according to the techniques described above.

As discussed herein, the example embodiment is described with reference to a pluggable connector such as an octal small form factor pluggable (OSFP); however the embodiments of the present disclosure may equally be applicable to a Quad Small Form-factor Pluggable (QSFP) connector as the cable connector or any connector (e.g., Small Form Pluggable (SFP), C-Form-factor Pluggable (CFP), and the like). Moreover, the embodiments of the present disclosure may also be used with any cable (e.g., passive copper cable (PCC), active copper cable (ACC), or the like) or interconnect utilized by data center racks and associated switch modules (e.g., an active optical module (AOM), QSFP transceiver module, or the like).

Additionally, as discussed herein, the example embodiment is described with reference to a vertical-cavity surface-emitting laser (VCSEL) as an element of a transceiver system; however, embodiments of the present disclosure may be equally applicable for use with any transceiver system and/or element. Still further, as discussed herein, the example embodiment is described with reference to a switch module configured to receive a cage receptacle assembly to allow signals to pass between a cable connector and the switch module. The present disclosure, however, contemplates that a network interface, a high-capacity adapter, or any other applicable networking interface may equally be used instead or in conjunction with the switch module to receive the cage receptacle.

Embodiments of the present disclosure are contemplated to be deployed in a data center environment. While embodiments will be described in connection with certain examples of data center environments, it should be appreciated that embodiments of the present disclosure are not so limited. Indeed, embodiments of the present disclosure contemplate the ability to deploy a cage receptacle assembly in any number of environments including a data center environment or any other suitable environment in which machine-to-machine communications are facilitated.

Illustrative data center environments and components are shown and will now be described with reference to Figs. 24 and 25. Data centers, high performance computing clusters, and/or the like are often formed of various computing components or networked devices, and communication networks formed of electrical and/or optical devices may be used to enable communication between the networked devices forming these implementations.

An illustrative data center 2404 may be or include a centralized facility designed to house computing resources 2402 and related components. The data center 2404 may operate to support the infrastructure required for advanced computational tasks, for efficient, secure, and reliable operations. The data center 2404 may include the building and structural components, including power supplies, cooling systems, fire suppression systems, and physical security measures that are configured to maintain optimal operating conditions and/or protect the equipment from environmental hazards and unauthorized access. An example data center 2404 may include high-performance servers or compute nodes, often arranged in racks. These servers may include processors (e.g., central processing units (CPUs), graphics processing units (GPUs), data processing units (DPUs) and/or the like), quantum processing units (QPUs), a plurality of parallel processing units (PPUs), and application-specific integrated circuits (ASICs). memory (e.g., RAM), and storage solutions (e.g., hard disk drives (HDDs), solid state drives (SSDs), and/or the like. The hardware configuration may be designed for parallel processing and high throughput, catering to the demands of high-performance computing (HPC) applications.

QPUs configured to perform one or more operations associated with a quantum algorithm In some embodiments, each of the one or more QPUs may include a plurality of qubits and the one or more QPUs may be in communication with each other via a quantum channel. In some embodiments, each of the plurality of qubits may include local qubits, global qubits, and/or synchronization qubits. In some embodiments, the local qubits of each QPU may be configured to perform the one or more operations associated with the quantum algorithm on the QPU that the local qubits are associated with.

The data center 2404 may include high-speed network equipment, such as network switches, routers, firewalls, and/or the like to facilitate fast and secure data transmission within the data center 2404 (e.g., between the servers or compute nodes) and between external networks. The data center 2404 may facilitate communication between servers or compute nodes through a network topology that ensures efficient data exchange, minimizes latency, and maximizes bandwidth. The network topology may dictate how various network devices, such as switches and routers, are interconnected for data flow. By implementing an effective network topology, the data center 2404 may support high-performance computing tasks. Examples of various network topologies may include hierarchical networking topologies such as the fat tree topology, Slim Fly topology, Dragonfly topology, and/or the like. The data center 2404 may adhere to a networking topology (e.g., a hierarchal networking topology), such as a fat tree topology, a Slim Fly topology, a Dragonfly topology, and/or the like. The data center 2404 routes traffic amongst the network switches and servers therein, and at least one layer of the topology in the data center 2404 is coupled to a communication network to allow networking traffic to flow between the data center 2404 and the network device(s).

Fig. 24 illustrates an example data center 2404 comprising a rack or cabinet that is designed to house servers, networking devices, modules, and other data center resources 2402, which may include computing equipment used in conjunction with optical fibers. Other resources 2402 that may benefit from the connectors depicted and described herein. For instance, resources 2402 that are configured to communicate with other resource 2402 via optical and/or electrical communications may be provided in a device such as a vehicle 2406 and/or a robotic device 2408.

The exemplary systems and methods of this disclosure have been described in relation to the pluggable network interface devices, modules, and systems. However, to avoid unnecessarily obscuring the present disclosure, the preceding description omits a number of known structures and devices. This omission is not to be construed as a limitation of the scope of the claimed disclosure. Specific details are set forth to provide an understanding of the present disclosure. It should, however, be appreciated that the present disclosure may be practiced in a variety of ways beyond the specific detail set forth herein.

A number of variations and modifications of the disclosure can be used. It would be possible to provide for some features of the disclosure without providing others.

References in the specification to "one embodiment," "an embodiment," "an example embodiment," "some embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in conjunction with one embodiment, it is submitted that the description of such feature, structure, or characteristic may apply to any other embodiment unless so stated and/or except as will be readily apparent to one skilled in the art from the description. The present disclosure, in various embodiments, configurations, and aspects, includes components, methods, processes, systems and/or apparatus substantially as depicted and described herein, including various embodiments, subcombinations, and subsets thereof. Those of skill in the art will understand how to make and use the systems and methods disclosed herein after understanding the present disclosure. The present disclosure, in various embodiments, configurations, and aspects, includes providing devices and processes in the absence of items not depicted and/or described herein or in various embodiments, configurations, or aspects hereof, including in the absence of such items as may have been used in previous devices or processes, e.g., for improving performance, achieving ease, and/or reducing cost of implementation.

The foregoing discussion of the disclosure has been presented for purposes of illustration and description. The foregoing is not intended to limit the disclosure to the form or forms disclosed herein. In the foregoing Detailed Description for example, various features of the disclosure are grouped together in one or more embodiments, configurations, or aspects for the purpose of streamlining the disclosure. The features of the embodiments, configurations, or aspects of the disclosure may be combined in alternate embodiments, configurations, or aspects other than those discussed above. This method of disclosure is not to be interpreted as reflecting an intention that the claimed disclosure requires more features than are expressly recited in each claim. Rather, as the following claims reflect, inventive aspects lie in less than all features of a single foregoing disclosed embodiment, configuration, or aspect. Thus, the following claims are hereby incorporated into this Detailed Description, with each claim standing on its own as a separate preferred embodiment of the disclosure.

Moreover, though the description of the disclosure has included description of one or more embodiments, configurations, or aspects and certain variations and modifications, other variations, combinations, and modifications are within the scope of the disclosure, e.g., as may be within the skill and knowledge of those in the art, after understanding the present disclosure. It is intended to obtain rights, which include alternative embodiments, configurations, or aspects to the extent permitted, including alternate, interchangeable and/or equivalent structures, functions, ranges, or steps to those claimed, whether or not such alternate, interchangeable and/or equivalent structures, functions, ranges, or steps are disclosed herein, and without intending to publicly dedicate any patentable subject matter.

Exemplary aspects are directed to a pluggable network interface device, comprising: a PCB comprising at least one heat-generating circuit package; a heatsink comprising a first surface and a second surface disposed opposite the first surface, the first surface being offset a thickness from the second surface, and the second surface arranged in direct contact with an outer surface of the at least one heat-generating circuit package; and a housing comprising: an outer shell defining an exterior of the housing; a receiving cavity disposed inside the outer shell; and an aperture extending through a first side of the outer shell from the exterior of the housing into the receiving cavity; wherein a portion of the PCB and the second surface of the heatsink are both disposed inside the receiving cavity, and wherein a portion of the heatsink extends from within the receiving cavity through the aperture arranging the first surface of the heatsink adjacent the exterior of the housing.

Any one or more of the above aspects include wherein a compliant seal is disposed between the heatsink and the housing, and wherein the compliant seal surrounds a periphery of the aperture and the portion of the heatsink. Any one or more of the above aspects include wherein the compliant seal is compressed between the heatsink and the housing, and wherein the compliant seal forms an airtight seal between the exterior of the housing and the receiving cavity. Any one or more of the above aspects include wherein the compliant seal is a thermal putty material. Any one or more of the above aspects include a spring arranged in contact with the heatsink, the spring maintaining a clamp force and the direct contact between the second surface of the heatsink and the outer surface of the at least one heat-generating circuit package. Any one or more of the above aspects include a fastener comprising a body extending from a first end of the fastener to a second end of the fastener, the body comprising a threaded portion adjacent the second end of the fastener and a cap portion adjacent the first end of the fastener, the threaded portion threadedly engaged with the housing, wherein the spring is configured as a compression spring, wherein the compression spring surrounds the body of the fastener, wherein the compression spring is disposed in a compressed state between the cap portion of the fastener and the heatsink, and wherein the compression spring maintains the second surface in direct contact with the outer surface of the at least one heat-generating circuit package. Any one or more of the above aspects include wherein herein the spring is configured as a spring clip, comprising: a first leg comprising a first slot; a second leg comprising a second slot, the second leg disposed offset a width distance from the first leg; and a center spring contact portion disposed between and joining the first leg and the second leg, wherein the first slot of the spring clip engages with a first tab of the heatsink, wherein the second slot of the spring clip engages with a second tab of the heatsink, wherein the first tab of the heatsink and the second tab of the heatsink are arranged on opposite width sides of the heatsink, wherein a center portion of the spring clip contacts the PCB, and wherein the center portion of the spring clip contacting the PCB maintains the second surface in direct contact with the outer surface of the at least one heat-generating circuit package. Any one or more of the above aspects include a first standoff disposed on a first width side of the heatsink; a second standoff disposed on a second width side of the heatsink, wherein the first width side is offset a distance from the second width side, and wherein a width portion of the PCB is disposed between the first standoff and the second standoff; and the spring being configured as a plate extending from the first standoff to the second standoff, the plate fastened to the first standoff at a first point and fastened to the second standoff at a second point, the plate comprising a bend disposed between the first point and the second point, wherein the bend extends in a direction toward the PCB contacting the PCB at a center area disposed between the first point and the second point, and wherein the bend contacting the PCB maintains the second surface in direct contact with the outer surface of the at least one heat-generating circuit package. Any one or more of the above aspects include wherein the pluggable network interface device comprises an overall outermost height and an overall outermost width, and wherein the first surface of the heatsink is in a plane of a surface of the overall outermost height or under the plane of a surface of the overall outermost height. Any one or more of the above aspects include wherein the housing further comprises: a first outer shell portion extending a first length and comprising a first cavity running along a portion of the first length, wherein the aperture extends through the first side of the first outer shell portion; and a second outer shell portion extending the first length and comprising a second cavity running along the portion of the first length, wherein the first outer shell portion is joined to the second outer shell portion, and wherein the first cavity and the second cavity together form the receiving cavity for the housing.

Exemplary aspects are directed to a pluggable network interface module, comprising: a split-shell housing running a first length from a first end of the split-shell housing to a second end of the split-shell housing, the split-shell housing comprising: a first shell portion extending the first length and comprising a first cavity running along a portion of the first length; a second shell portion extending the first length and comprising a second cavity running along a portion of the first length, wherein the first shell portion is joined to the second shell portion, and wherein the first cavity and the second cavity together form a receiving cavity for the split-shell housing; and an aperture extending through a first side of the first shell portion from the receiving cavity to an exterior of the split-shell housing; a circuit substrate disposed at least partially within the receiving cavity, the circuit substrate comprising at least one heat-generating element; and a heatsink comprising a first surface and a second surface disposed opposite the first surface, the first surface being offset a thickness from the second surface, and the second surface arranged in direct contact with an outer surface of the at least one heat-generating element, wherein the second surface of the heatsink is disposed inside the receiving cavity, and wherein a portion of the heatsink extends from within the receiving cavity through the aperture arranging the first surface of the heatsink adjacent the exterior of the first shell portion of the split-shell housing.

Any one or more of the above aspects include a compliant gasket material disposed between the heatsink and the first shell portion of the split-shell housing, wherein the compliant gasket material surrounds a periphery of the aperture and the portion of the heatsink. Any one or more of the above aspects include wherein the compliant gasket material is compressed between the heatsink and the first shell portion of the split-shell housing, and wherein the compliant gasket material forms an airtight seal between the exterior of the split-shell housing and the receiving cavity. Any one or more of the above aspects include wherein the compliant gasket material is a gel thermal interface material. Any one or more of the above aspects include a spring arranged in contact with the heatsink, the spring maintaining the direct contact between the second surface of the heatsink and the outer surface of the at least one heat-generating element. Any one or more of the above aspects include wherein the spring is physically attached to the heatsink by at least one of a fastener and a slot-and-tab interface.

Exemplary aspects are directed to a pluggable network interface module, comprising: a split-shell housing running a first length from a first end of the split-shell housing to a second end of the split-shell housing, the split-shell housing comprising: a first shell portion extending the first length and comprising a first cavity running along a portion of the first length; a second shell portion extending the first length and comprising a second cavity running along a portion of the first length, wherein the first shell portion is joined to the second shell portion, and wherein the first cavity and the second cavity together form a receiving cavity for the split-shell housing; and an aperture extending through a first side of the first shell portion from the receiving cavity to an exterior of the split-shell housing; a circuit substrate disposed at least partially within the receiving cavity, the circuit substrate comprising at least one heat-generating element; a heatsink comprising a first surface and a second surface disposed opposite the first surface, the first surface being offset a thickness from the second surface, and the second surface arranged in direct contact with an outer surface of the at least one heat-generating element, wherein the second surface of the heatsink is disposed inside the receiving cavity, and wherein a portion of the heatsink extends from within the receiving cavity through the aperture arranging the first surface of the heatsink adjacent the exterior of the first shell portion of the split-shell housing; and a spring arranged in contact with the heatsink, the spring maintaining the direct contact between the second surface of the heatsink and the outer surface of the at least one heat-generating element.

Any one or more of the above aspects include wherein the spring is configured as a spring clip, comprising: a first leg comprising a first slot; a second leg comprising a second slot, the second leg disposed offset a width distance from the first leg; and a center spring contact portion disposed between and joining the first leg and the second leg, wherein the first slot of the spring clip engages with a first tab of the heatsink, wherein the second slot of the spring clip engages with a second tab of the heatsink, wherein the first tab of the heatsink and the second tab of the heatsink are arranged on opposite width sides of the heatsink, wherein a center portion of the spring clip contacts the circuit substrate, and wherein the center portion of the spring clip contacting the circuit substrate maintains the second surface in direct contact with the outer surface of the at least one heat-generating element. Any one or more of the above aspects include a first standoff disposed on a first width side of the heatsink; a second standoff disposed on a second width side of the heatsink, wherein the first width side is offset a distance from the second width side, and wherein a width portion of the circuit substrate is disposed between the first standoff and the second standoff; and the spring being configured as a plate extending from the first standoff to the second standoff, the plate fastened to the first standoff at a first point and fastened to the second standoff at a second point, the plate comprising a bend disposed between the first point and the second point, wherein the bend extends in a direction toward the circuit substrate contacting the circuit substrate at a center area disposed between the first point and the second point, and wherein the bend contacting the circuit substrate maintains the second surface in direct contact with the outer surface of the at least one heat-generating element. Any one or more of the above aspects include wherein the pluggable network interface module is an OSFP device.

Aspects of the present disclosure also include: pluggable network interface device, comprising: a substrate supporting at least one heat generating circuit package; a heatsink facilitating transfer of heat away from the at least one heat generating circuit package; and a housing, comprising: a first shell portion; and a second shell portion that interfaces with the first shell portion to form a cavity for the housing in which the substrate and the heatsink are at least partially contained.

In some aspects, the heatsink is disposed between the first shell portion and the substrate.

In some aspects, the heatsink facilitates the transfer of heat away from the at least one heat generating circuit package via at least two modes of heat transfer.

In some aspects, the at least two modes of heat transfer comprise conduction and convection.

In some aspects, the first shell portion comprises at least one opening that exposes the heatsink and enables air to flow through the heatsink.

In some aspects, the at least one opening comprises a first opening and a second opening.

In some aspects, the first shell portion comprises a contact surface that faces toward the substrate.

In some aspects, the heatsink comprises one or more finned structures.

In some aspects, the one or more finned structures comprise at least one of a c-shape and a u-shape.

In some aspects, the heatsink further comprises at least one Thermal Interface Material (TIM).

In some aspects, the at least one TIM contacts the one or more finned structures and further contacts the first shell portion.

In some aspects, the heatsink further comprises at least one strip of foil between the at least one TIM and the one or more finned structures.

In some aspects, the first shell portion comprises a cover that conductively dissipates heat from the heatsink.

Aspects of the present disclosure also include a pluggable network interface device, comprising: a substrate supporting at least one heat generating circuit package; a heatsink facilitating transfer of heat away from the at least one heat generating circuit package; and a split-shell housing having a cavity in which the substrate and the heatsink are at least partially contained, wherein the split-shell housing further comprises at least one opening that enables an airflow across at least a portion of the heatsink.

In some aspects, the at least one opening comprises a first opening near a proximate end of the pluggable network interface device and a second opening near a distal end of the pluggable network interface device.

In some aspects, the distal end of the pluggable network interface device is configured to be inserted into a receptacle.

In some aspects, the split-shell housing is configured as at least one of a small form factor pluggable (SFP), a quad SFP (QSFP), a QSFP-double density (QSFP-DD), and an octal SFP (OSFP).

In some aspects, the heatsink comprises: a heatsink base; a plurality of finned structures supported by the heatsink base; and a Thermal Interface Material (TIM) that thermally connects one or more of the plurality of finned structures with at least a portion of the split-shell housing.

In some aspects, the split-shell housing comprises a first shell portion and a second shell portion and wherein the heatsink is positioned between the first shell portion and the substrate.

Aspects of the present disclosure also include a pluggable network interface device, comprising: a substrate supporting at least one heat generating circuit package; a housing having a cavity in which the substrate is at least partially contained; and a heatsink contained in the cavity of the housing with the at least one heat generating package, wherein the heatsink facilitates transfer of heat away from the at least one heat generating circuit package by conduction and convection.

Any one or more of the above aspects/embodiments as substantially disclosed herein.

Any one or more of the aspects/embodiments as substantially disclosed herein optionally in combination with any one or more other aspects/embodiments as substantially disclosed herein.

One or means adapted to perform any one or more of the above aspects/embodiments as substantially disclosed herein.

Any one or more of the features disclosed herein.

Any one or more of the features as substantially disclosed herein.

Any one or more of the features as substantially disclosed herein in combination with any one or more other features as substantially disclosed herein.

Any one of the aspects/features/embodiments in combination with any one or more other aspects/features/embodiments.

Use of any one or more of the aspects or features as disclosed herein.

It is to be appreciated that any feature described herein can be claimed in combination with any other feature(s) as described herein, regardless of whether the features come from the same described embodiment.

As used herein, the singular forms "a," "an," and "the" are intended to include the plural forms as well, unless the context clearly indicates otherwise. It will be further understood that the terms "include," "including," "includes," "comprise," "comprises," and/or "comprising," when used in this specification, specify the presence of stated features, integers, steps, operations, elements, and/or components, but do not preclude the presence or addition of one or more other features, integers, steps, operations, elements, components, and/or groups thereof. The term "and/or" includes any and all combinations of one or more of the associated listed items.

The term "a" or "an" entity refers to one or more of that entity. As such, the terms "a" (or "an"), "one or more," and "at least one" can be used interchangeably herein. It is also to be noted that the terms "comprising," "including," and "having" can be used interchangeably.

The phrases "at least one," "one or more," "or," and "and/or" are open-ended expressions that are both conjunctive and disjunctive in operation. For example, each of the expressions "at least one of A, B and C," "at least one of A, B, or C," "one or more of A, B, and C," "one or more of A, B, or C," and "A, B, and/or C" means A alone, B alone, C alone, A and B together, A and C together, B and C together, or A, B, and C together. When each one of A, B, and C in the above expressions refers to an element, such as X, Y, and Z, or a class of elements, such as X1-Xn, Y1-Ym, and Z1-Zo, the phrase is intended to refer to a single element selected from X, Y, and Z, a combination of elements selected from the same class (e.g., X1 and X2) as well as a combination of elements selected from two or more classes (e.g., Y1 and Zo).

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and this disclosure.

It should be understood that every maximum numerical limitation given throughout this disclosure is deemed to include each and every lower numerical limitation as an alternative, as if such lower numerical limitations were expressly written herein. Every minimum numerical limitation given throughout this disclosure is deemed to include each and every higher numerical limitation as an alternative, as if such higher numerical limitations were expressly written herein. Every numerical range given throughout this disclosure is deemed to include each and every narrower numerical range that falls within such broader numerical range, as if such narrower numerical ranges were all expressly written herein.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A pluggable network interface device, comprising:
a substrate supporting at least one heat generating circuit package;
a heatsink facilitating transfer of heat away from the at least one heat generating circuit package; and
a housing, comprising:
a first shell portion; and
a second shell portion that interfaces with the first shell portion to form a cavity for the housing in which the substrate and the heatsink are at least partially contained.

2. The pluggable network interface device of claim 1, wherein the heatsink is disposed between the first shell portion and the substrate.

3. The pluggable network interface device of claim 2, wherein the heatsink facilitates the transfer of heat away from the at least one heat generating circuit package via at least two modes of heat transfer, wherein the at least two modes of heat transfer comprise conduction and convection.

4. The pluggable network interface device of claim 2 or 3, wherein the first shell portion comprises at least one opening that exposes the heatsink and enables air to flow through the heatsink, wherein the at least one opening comprises a first opening and a second opening.

5. The pluggable network interface device of any of claims 2-4, wherein the first shell portion comprises a contact surface that faces toward the substrate.

6. The pluggable network interface device of any of claims 2-5, wherein the heatsink comprises one or more finned structures, wherein the one or more finned structures comprise at least one of a c-shape and a u-shape, wherein the heatsink further comprises at least one Thermal Interface Material (TIM).

7. The pluggable network interface device of claim 6, wherein the at least one TIM contacts the one or more finned structures and further contacts the first shell portion.

8. The pluggable network interface device of claim 6 or 7, wherein the heatsink further comprises at least one strip of foil between the at least one TIM and the one or more finned structures.

9. The pluggable network interface device of any of claims 2-8, wherein the first shell portion comprises a cover that conductively dissipates heat from the heatsink.

10. A pluggable network interface device, comprising:
a substrate supporting at least one heat generating circuit package;
a heatsink facilitating transfer of heat away from the at least one heat generating circuit package; and
a split-shell housing having a cavity in which the substrate and the heatsink are at least partially contained, wherein the split-shell housing further comprises at least one opening that enables an airflow across at least a portion of the heatsink.

11. The pluggable network interface device of claim 10, wherein the at least one opening comprises a first opening near a proximate end of the pluggable network interface device and a second opening near a distal end of the pluggable network interface device, wherein the distal end of the pluggable network interface device is configured to be inserted into a receptacle.

12. The pluggable network interface device of claim 10 or 11, wherein the split-shell housing is configured as at least one of a small form factor pluggable (SFP), a quad SFP (QSFP), a QSFP-double density (QSFP-DD), and an octal SFP (OSFP).

13. The pluggable network interface device of claim 10, 11, or 12, wherein the heatsink comprises:
a heatsink base;
a plurality of finned structures supported by the heatsink base; and
a Thermal Interface Material (TIM) that thermally connects one or more of the plurality of finned structures with at least a portion of the split-shell housing.

14. The pluggable network interface device of any of claims 10-13, wherein the split-shell housing comprises a first shell portion and a second shell portion and wherein the heatsink is positioned between the first shell portion and the substrate.

15. A pluggable network interface device, comprising:
a substrate supporting at least one heat generating circuit package;
a housing having a cavity in which the substrate is at least partially contained; and
a heatsink contained in the cavity of the housing with the at least one heat generating package, wherein the heatsink facilitates transfer of heat away from the at least one heat generating circuit package by conduction and convection.
